(19) Europäisches Patentamt / European Patent Office / Office européen des brevets

(11) **EP 3 831 723 B1**

(12) **EUROPEAN PATENT SPECIFICATION**

(45) Date of publication and mention of the grant of the patent:
**27.09.2023  Bulletin 2023/39**

(21) Application number: **19843080.3**

(22) Date of filing: **27.09.2019**

(51) International Patent Classification (IPC):
**B64G 1/00** *(2006.01)*      **B64G 5/00** *(2006.01)*
**B64G 1/12** *(2006.01)*

(52) Cooperative Patent Classification (CPC):
**B64G 1/002; B64G 5/00;** B64G 1/12

(86) International application number:
**PCT/BY2019/000014**

(87) International publication number:
**WO 2020/024035 (06.02.2020 Gazette 2020/06)**

(54) **GLOBAL TRANSPORTATION SYSTEM AND METHOD FOR PLACING A PAYLOAD INTO A CIRCULAR ORBIT**

GLOBALES TRANSPORTSYSTEM UND VERFAHREN ZUM EINBRINGEN EINER NUTZLAST IN EINE KREISFÖRMIGE UMLAUFBAHN

ENSEMBLE DE TRANSPORT PANPLANÉTAIRE ET PROCÉDÉ POUR METTRE DES CHARGES UTILES EN ORBITE CIRCULAIRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**09.06.2021  Bulletin 2021/23**

(73) Proprietor: **Yunitski, Anatoli Eduardovich
Minsk 220051 (BY)**

(72) Inventor: **Yunitski, Anatoli Eduardovich
Minsk 220051 (BY)**

(74) Representative: **Winter, Brandl - Partnerschaft mbB
Alois-Steinecker-Straße 22
85354 Freising (DE)**

(56) References cited:
WO-A1-2016/068751      WO-A2-2014/021742
RU-C2- 2 480 384       SU-A1- 1 165 417
US-A- 4 318 517        US-A1- 2017 050 751
US-B1- 6 311 926

• Sky Way: "Visualization of Yunitskiy's OTS", , 10 October 2017 (2017-10-10), XP055888253, Retrieved from the Internet: URL:https://www.youtube.com/watch?v=9KZe6 Y foJVc&ab_channel=SkyWay
• , Retrieved from the Internet: URL:http://www.yunitskiy.com/news/2017/new s20170414.htm
• Vasilchikova E.N., Koshkin N.I.: "Passage; Elementarnaia fizika. Spravochnik", Elementarnaia fizika. Spravochnik, 1996, page 52, XP009526218,

## Description

### Technical field

The invention relates to the area of space science and space transportation, in particular, to the area of commercial exploitation of outer space, and, namely - to the structure of multiple-mission geospatial transportation complex and method of operation thereof, based on the principle of non-rocket planet surface to the planned circular orbit payload insertion. Its intended purpose of use is to solve the set of geospatial problems in industrial-scale volumes, for instance, for the purpose of relocation of ecologically harmful portion of earth-based manufacturing into near space and non-rocket space industrialization, as well as - stabilization of global climate and carrying out of R&D, special-purpose, touristic and other types of works and services in outer space.

### Background Art

Russian scientist, the pioneer of cosmonautics, K.E. Tsiolkovsky, who was first to lay theoretical foundation for manned spaceflight, elaborated and justified rocket reaction principle. He highlighted the need to search for and create alternative methods and equipment to launch humans into space and set up extraterrestrial orbital space stations, as intermediate (support) bases in development of interplanetary communications and colonization in the form of human settlements in space. In his studies, K.E. Tsiolkovsky presents a profound assessment of the number of systems of possible transportation space structures developed by him, including Space Elevator, Equatorial Tower and Equatorial Circular Train [1].

The structure has been also known as proposed by Yu. Artsutanov' cosmic (space) elevator as method for delivery of cargos to geostationary orbit [2]. However, the design of cosmic elevator, with the overall viability of such approach to the issue of replacement of jet rocket thrust during payload insertion into circumplanetary orbit, has a sufficiently high unit cost of its delivery, with the required extremely high strength of materials of the self-bearing elevator cable, length around 40 thousand km, which are capable to withstand dead load and load due to massive counterweight.

The system of such space vehicle, named Space Fountain, is known: a structure for delivering cargos to orbit. Space Fountain is an alternative to space elevator, and as compared to the design thereof, Space Fountain is an extremely tall hollow tower with its cavity filled with special granular substance. This substance, after transferring kinetic energy to it, moves rapidly up from the base of the tower and transfers this energy to the top thereof, after which it falls back to the base of the tower under the influence of gravity. Cargos along the Space Fountain can be lifted in two ways: with the assistance of special systems like elevator in buildings, or with the stream of granules (pellets) [3].

Unlike the traditional space elevator, Space Fountain can be built near the planet's surface. The tower will be capable of lifting all the payload needed for its own construction. Space Fountain can be built and will function successfully even on celestial bodies with very low gravity, such as the Moon, Mercury.

Drawback of this technical solution is that Space Fountain is active-use structure and therefore requires constant consumption of significant amount of energy to maintain its existence and can only lift cargo via assigned altitude rather than put payload into circular orbit at the first cosmic velocity.

The Slingatron of Tidman [4] is known. Slingatron - space slingshot - features the same principle working as in a traditional slingshot. Slingatron is based on a large spiral tube, inside which acceleration of a small capsule with microsatellite happens. The spiral tube is fixed on system of rotating levers with counterweights that drive powerful electric motors.

Disadvantage of such technical solution is rather high specific cost of delivering payload to the orbit of a planet with a dense atmosphere and high overloads (accelerations) acting on the cargo put into space.

A space vehicle such as Space Gun is also known, a method of launching an object into outer space with a huge gun, of a shooting or electromagnetic type, is also known. It refers to rocket-free methods of placing objects into orbit [5].

Excessive launch overloads experienced by the "projectile" mean that the space gun will not be able to safely orbit humans or fragile objects, but will be limited to delivering increased strength cargo. The exception are such electromagnetic guns, as Gauss cannon and railgun, with which the acceleration time is theoretically unlimited and there is no barrel creating an extremely high force of air resistance on the nose of the "projectile". The resistance of atmosphere creates additional difficulties in controlling the flight path of the object already released from the gun. At very large barrel lengths (about 2000 km), a human-acceptable overload can be obtained. In this case, it is better to position the barrel not vertically, but horizontally, until the half-barrel reaches the boundary of space (100 km altitude). If the space gun barrel reaches the upper stratosphere layers, where the air is less dense, these problems are partially solved. If acceptable solutions to these main problems are found, the space gun can allow cargo to enter outer space at an unprecedented low price (about $550 per kilogram).

There is a less well-known project to bring an object into outer space, which functions in the same way as space elevator, but does not need materials ahead of the modern state of the art. It's called Lofstrom loop. The construction of this loop is based on a conductive cord closed in a ring and drawn to a huge length inside a vacuum tube. To prevent contact of cord with tube walls, it is suspended therein by means of magnetic levitation [6].

With the help of a powerful linear electromagnetic motor located on the ground, the loop cord is accelerated to a velocity of 14-15 km/sec inside the tube. The moment of inertia of the rotating cord tends to give the structure a circular shape, however, this is hampered by the fasteners, which grip the part of the tube (in which the cord moves) located on Earth. But the other part - unrestrained, under the influence of the energy of the rotating cord, rises upwards. The huge energy accumulated in the cord rotating on the magnetic suspension, lifts the entire structure until a grand system appears - a loop, one portion of which lies on the ground, and another is raised to altitude of 80 kilometers and held on that level by rope fixtures. In order to launch the cargo into space, it is lifted to altitude of about 80 km and installed at one of ends of a multi-kilometer portion of the loop running parallel to Earth. Magnetic fields created by the acceleration unit interact with the magnetic field in the conductor and, due to the occurring eddy currents, accelerate the cargo until it has gained the required orbital velocity. After that, with the help of a small rocket engine, the cargo is separated from Lofstrom loop and enters the required orbit.

The disadvantage of such a design is the unpredictability of its electric discharge interaction with the ionosphere, as well as - in the process of electric closure of the ionosphere with the Earth's surface.

The Space Bridge (SB) is also known for its design of rocket-free space transportation systems. "SB" is the design of astroengineering installation for non-rocket method of inserting cargo into planetary orbit with the use of ring which becomes weightless by rotation around the planet's equator. "SB" represents a huge trestle (overpass) made in the form of an annular body with an endless flywheel belt placed therein with the feasibility of moving at space velocities, shrouding the Earth along the equator. Part of the trestle lies on the surface of the planet, and the other part extends into space. Along the trestle the cargo is taken into and back from space. The trestle is held suspended by centrifugal forces created therein by endless flywheel belt [7]. Compared to the space elevator, "SB" has a significant advantage - stresses in its design are by an order less than those of the space elevator, and are quite bearable by existing structural materials.

The disadvantage of such a design is also the unpredictability of its electric discharge interaction with the ionosphere, as well as - in the process of electric closure of the ionosphere with the Earth's surface.

Earth-Moon Complex (EMC) [8] is known, which comprises Earth-space lift and Earth-Moon module. Earth-space lift is made in form of retractable cylindrical sections having screws with hoops (collars) stabilizing vertical lift and mounted vertically in ground in reinforced concrete housing. The housing also has tanks filled with liquefied natural gas with high-pressure chambers supplying high pressure of gases and steam to the lower part of lifting cylinders. Earth-Moon module has cylindrical shape and is equipped with technical compartments, cargo elevator with lifting shock-absorbing pillar and movable supports.

The drawback of such design is the catastrophic consequences in case of earthquake, skew in one of the telescopic supports during cargo lifting, atmospheric effects on the space lift which features huge windage, and, in addition, the unpredictability of electric discharge interaction of "EMC" with the ionosphere, as well as - in the process of electric closure of the ionosphere with the Earth's surface. In addition, such a compression structure, with large altitude and relatively small transverse dimensions, will lose stability.

There is known magneto-plasma method of inserting payload in geostationary orbit [9], according to which a capsule with payload and passengers is isolated by magnetic field and ejected by plasma flow formed with the help of plasmatrons. Hereby, quenching effect on accelerating plasma from the side of Earth's atmosphere is eliminated by means of artificial vortex-whirl, which is created by gas-guiding elements of platform, using plasma, which flows from peripheral plasmatrons. Plasma flow ejecting capsule is directed inside and along axis of this vortex-whirl.

A disadvantage of such a method of putting payloads into Earth orbit is the unacceptable threat of destruction of the planet's protective ozone layer and the unpredictability of the results of the electric discharge interaction of the plasma whirl with the Earth's ionosphere.

A model of orbital station [10] is known, comprising mockup of annular orbital station, which encircles the planet and is made in the form of an extensible toroid-shape shell, with which solenoids are fastened to, electrically connected to power source and interacting with a toroidal movable core of variable perimeter.

The disadvantage of such installation is the absence of cargo compartments and, as a result, the inability to perform a real task of delivering payload into space.

Accepted as a prototype, a general planetary vehicle by Yunitski [11] is known, which represents a circular toroid-shape bearing structure, ringing around the planet and its center of mass, and comprising a vacuum sealed hollow body with axisymmetrically located inside thereof, at least two flywheels in the form of endless belts, and with electromagnetic suspension systems contactlessly mounted thereon; equipped with electromagnetic drives connected through control system and a communication system of electric energy with power supply source; whereby the hollow body of flywheels is arranged inside the shell aligned therewith, also coaxially positioned within the female outer casing, the casing being assembled into a continuous chain of rigid units, performed with feasibility of mutual longitudinal movement, whereas space free of rigid units is used to form transportation compartments, whereby that said casing is furnished with locks to be secured-detached on launch overpass supports arranged along planet perimeter along the equator.

Disadvantages of the above planetary vehicle are as follows: uncertainty of specific characteristics and parameters of device elements implementation, their interaction and interconnection.

At the heart of the claimed invention lies the task of tackling the following technical tasks:

- ensuring payload delivery to planetary orbit due to internal (centrifugal) forces of a self-carrying general planetary vehicle, without use of jet engines;
- reduction of specific cost of payload delivery to planetary orbit;
- enabling industrial-scale volumes both planet-to-circumplanetary-orbit and circumplanetary-orbit-to-planet delivery of payloads;
- reduction of overload during payload delivery to planetary orbit;
- guaranteeing feasibility of repeated use of general planetary vehicle for achievement of the set goals for geospatial transportation of payload;
- solving the problem of functioning of general planetary vehicle on any planet, including - partially or completely covered with a liquid ocean and on a planet having a dense gaseous atmosphere;
- achieving ecological purity and safety of processes of both earth-to-planetary orbit and orbit-to-planet surface payload delivery;
- solving the problem of favorable influence on weather and stabilization of climate on Earth.

In the document Sky Way: "Visualization of Yunitskiy's OTS", 10 October 2017 (2017-10-10), XP055888253, Retrieved from the Internet: URL:https://www.youtube.com/watch?v=9KZe6YfoJVc&ab_channel=SkyWay relating to a launch and transportation ring orbiting around the earth, these tasks are not satisfactory solved.

The elevated load-bearing platform of document US 2017/050751 A1 enables facilities to be supported at a high altitude above the surface and, if desired, at a fixed position relative to the surface, wherein the circumference of at least one bearing is smaller than the circumference of a planetary body and yet large enough to completely encircle a portion of said planetary body, and a plurality of high tech stays are connected between at least one bearing and at least one anchor point positioned on the protruding side of said planetary body.

Document US 6 311 926 B1 disclosed a method for launching a spacecraft into outer space around the earth by magnetically suspending a sky tube having an inlet on earth and an outlet at altitude, wherein the sky tube is evacuated and the spacecraft is propelled therethrough to achieve escape velocity for reaching outer space.

**Summary of invention**

The object of the present invention is solved by the subject matters of claims 1, 2, 3 and 9. Further aspects of the invention are disclosed in the subclaims.

More specifically, the technical goals according to the claimed invention are attained with use of general planetary geospatial transportation complex by Yunitski, which comprises general planetary vehicle encircling the planet along the line of the planet surface cross-section by the plane parallel to plane of the equator, fastened, *according to the first variant (embodiment) of the claimed invention,* on launch overpass of altitude h, m, defined by the ratio:

$$10^{-7} \leq h/R \leq 10^{-4}, \qquad (1)$$

where R, m, - radius of planet in plane of arranging launch overpass,
and representing a linear bearing structure encircling the planet and having length $L_0$, m, comprising pressure hull with at least two vacuum channels, ringing around the planet, in the first one of which the first endless planet-encircling linear flywheel is located, and in the second one - the second endless planet-encircling linear flywheel is located, whereas the first linear flywheel and the second linear flywheel are contactlessly positioned in relation to the walls of the corresponding vacuum channels and equipped with systems of magnetic and/or electromagnetic suspension and linear electromagnetic drives of the first flywheel and the second flywheel, respectively, configured to accelerate linear flywheels to velocity of $V_0$, m/sec, defined by the ratio:

$$1,1 \leq V_0/V_{eh} \leq 5, \qquad (2)$$

where $V_{eh}$, m/sec, - first cosmic velocity at altitude *h,* m,

linear bearing structure is equipped with transportation compartments and configured to be elongated without uniformity loss, defined by the ratio:

$$1,01 \leq L_H/L_0 \leq 1,25, \qquad (3)$$

where $L_H$, m, - length of linear bearing structure at circular orbit of altitude $H$, m, and linear flywheels having masses $m_1$ and $m_2$, kg, defined by the ratio:

$$0,1 \leq m_1/m_2 \leq 10, \qquad (4)$$

whereas drives of linear flywheels are connected with power supply source via control and communication systems.

The specified result is achieved also thanks to the general planetary geospatial transportation complex by Yunitski, which includes general planetary vehicle encircling the planet along the line of the planet surface cross-section by the plane parallel to plane of the equator, fastened, *according to the second variant (embodiment) of the claimed invention,* in liquid ocean at launch depth $h_v$, m, defined by the ratio:

$$10^{-7} \leq h_v/R_v \leq 10^{-4}, \qquad (5)$$

where $R_v$, m, - radius of planet in plane of arranging general planetary vehicle in liquid ocean,
and representing a linear bearing structure encircling the planet and having length $L_0$, m, comprising pressure hull with at least two vacuum channels, ringing around the planet, in the first one of which the first endless planet-encircling linear flywheel is located, and in the second one - the second endless planet-encircling linear flywheel is located, whereas the first linear flywheel and the second linear flywheel are contactlessly positioned in relation to the walls of the corresponding vacuum channels and equipped with systems of magnetic and/or electromagnetic suspension and linear electromagnetic drives of the first flywheel and the second flywheel, respectively, configured to accelerate linear flywheels to velocity of $V_0$, m/s defined by the ratio:

$$1,1 \leq V_0/V_{vh} \leq 5, \qquad (6)$$

where $V_{vh}$, m/sec, - first cosmic velocity at launch depth $h_v$, m,
linear bearing structure is equipped with transportation compartments and configured to be elongated without uniformity loss, defined by the ratio (3):

$$1,01 \leq L_H/L_0 \leq 1,25,$$

and linear flywheels have masses $m_1$ and $m_2$, kg, defined by the ratio (4):

$$0,1 \leq m_1/m_2 \leq 10,$$

whereby general planetary vehicle is performed with launch density $\rho_{1v}$, kg/m³, defined by the ratio:

$$0,5 \leq \rho_2/\rho_{1v} \leq 2, \qquad (7)$$

where $\rho_2$, kg/m³, - density of liquid of planetary ocean at launch depth $h_v$, m, whereas drives of linear flywheels are connected with power supply source via control and communication systems.

Achieving the given technical result is secured also by general planetary geospatial transportation complex by Yunitski comprising general planetary vehicle encircling the planet along the line of the planet surface cross-section by the plane parallel to plane of the equator, fastened, *according to the third variant (embodiment) of the claimed invention,* in gaseous environment of planetary atmosphere at launch altitude $h_l$, m, defined by the ratio:

$$10^{-7} \le h_l/R_l \le 10^{-2}, \qquad (8)$$

where $R_l$, m, - radius of planet in plane of arranging general planetary vehicle in gaseous environment of planetary atmosphere,
and representing a linear bearing structure encircling the planet and having length $L_0$, m, comprising pressure hull with at least two vacuum channels, ringing around the planet, in the first one of which the first endless planet-encircling linear flywheel is located, and in the second one - the second endless planet-encircling linear flywheel is located, whereas the first linear flywheel and the second linear flywheel are contactlessly positioned in relation to the walls of the corresponding vacuum channels and equipped with systems of magnetic and/or electromagnetic suspension and linear electromagnetic drives of the first flywheel and the second flywheel, respectively, configured to accelerate linear flywheels to velocity of $V_0$, m/s defined by the ratio:

$$1,1 \le V_0/V_{lh} \le 5, \qquad (9)$$

where $V_{lh}$, m/sec, - first cosmic velocity at launch altitude $h_l$, m,
linear bearing structure is equipped with transportation compartments and configured to be elongated without uniformity loss, defined by the ratio (3):

$$1,01 \le L_H/L_0 \le 1,25,$$

and linear flywheels have masses $m_1$ and $m_2$, kg, defined by the ratio (4):

$$0,1 \le m_1/m_2 \le 10,$$

whereby general planetary vehicle is performed with launch density $\rho_{11}$, kg/m³, defined by the ratio:

$$0,1 \le \rho_3/\rho_{ll} \le 2, \qquad (10)$$

where $\rho_3$, kg/m³, - density of the liquid and/or gaseous environment of planetary atmosphere at launch altitude $h_l$, m, whereas drives of linear flywheels are connected with power supply source via control and communication systems.

Achieving the defined goals according to any of the three variants of the present invention is guaranteed also by the fact that transportation compartments may be embodied both inside the body of linear bearing structure, or fastened outside thereupon.
Achieving the defined goals according to any of the three variants of the present invention is guaranteed also by the fact that general planetary vehicle is equipped by linear ballast system, covering the planet and uniformly loaded along its entire length with liquid and/or gaseous ballast.
General planetary geospatial transportation complex by Yunitski, according to any of the three variants of the present invention, may be embodied in such way that linear bearing structure of general planetary vehicle is made from elastically deformable material with modulus of elasticity E, Pa, within the following range:

$$10^8 \le E \le 5 \times 10^{11} \qquad (11)$$

General planetary geospatial transportation complex by Yunitski, according to any of the three variants of the present invention, may be embodied in such way that linear bearing structure is embodied as telescopically interconnected units.
General planetary geospatial transportation complex by Yunitski, according to any of the three variants of the present invention, may be embodied in such way that linear bearing structure is embodied as units interconnected by bellows.
General planetary geospatial transportation complex by Yunitski, according to the second variant of the present invention, may be embodied in such way that launch density $\rho_{1v}$, kg/m³, of general planetary vehicle is secured by pontoon means, responsible for fastening linear bearing structure in liquid of ocean at depth $h_v$, m.

General planetary geospatial transportation complex by Yunitski, according to the third variant of the present invention, may be embodied in such way that launch density $\rho_{11}$, kg/m³, of general planetary vehicle is secured by balloons, responsible for fastening linear bearing structure in gaseous environment at altitude $h_l$, m.

Achieving the defined goals according to any of the three variants of the present invention is guaranteed also by the fact that the general planetary geospatial transportation complex by Yunitski is equipped by fixing locks of linear bearing structure at launch altitude $h$, m, or $h_v$, m, or $h_l$, m, respectively in elevated structure (overpass), in liquid of ocean or in gaseous environment of planet, along the entire length $L_0$, m, thereof.

Achieving the defined goals is also secured by the method for planet surface to circular orbit payload insertion, according to which:

- general planetary geospatial transportation complex by Yunitski is made available which comprises general planetary vehicle embodied as according to any of claims 1, 2 and 3, encircling the planet along the line of the planet surface cross-section by the plane parallel to plane of the equator;
- general planetary vehicle, along its entire length $L_0$, m, is held on launch overpass of altitude h, m, and/or liquid of ocean at launch depth $h_v$, m, and/or in gaseous environment of planet at launch altitude $h_l$, m, by fixing locks of linear bearing structure in initial launch position;
- payload of total mass $m_3$, kg, is placed uniformly along the entire length $L_0$, m, of linear bearing structure in transportation compartments;
- at least one linear flywheel is subjected to acceleration at least by 10% in co-rotational direction to velocity of $V_0$, m/sec, exceeding first cosmic velocity $V_{eh}$, m/sec, at altitude h, m, of launch overpass, and/or $V_{vh}$, m/sec, - first cosmic velocity in liquid of ocean at launch depth $h_v$, m, and/or $V_{lh}$, m/sec, - first cosmic velocity in gaseous environment of planetary atmosphere at launch altitude $h_l$, m;
- launch of general planetary vehicle is executed via detachment thereof along its entire length $L_0$, m, from fixing locks of linear bearing structure;
- lifting of payload of total mass $m_3$, kg, with use of linear bearing structure of general planetary vehicle on planned circular orbit of altitude H, m, centrifugally, due to action of at least one from linear flywheels;
- guaranteed achieving of circumferential velocity of linear bearing structure of general planetary vehicle around the planet in co-rotational direction, equal to first cosmic velocity $V_{1H}$, m/sec, on planned circular orbit of altitude $H$, m, above surface of planet, via deceleration of the first linear flywheel and transmission of energy (produced due to deceleration thereof) to acceleration of the second linear flywheel in counter direction;
- shutting down solenoid actions of both linear flywheels on planned circular orbit of altitude H, m, above surface of planet and unloading of transportation compartments of general planetary vehicle;
- returning of general planetary vehicle into initial launch position by lowering altitude of deployment of linear bearing structure of general planetary vehicle from circular orbit of altitude $H$, m, over planet surface, to value h, m, or $h_v$, m, or $h_l$, m, respectively in overpass, in liquid of ocean or in gaseous environment of planetary atmosphere, via deceleration of one of linear flywheels and acceleration of another linear flywheel in counter direction to receive zero circumferential velocity by linear bearing structure of general planetary vehicle in relation to planet;
- upon return of general planetary vehicle into initial launch position, clamping thereof with use of fixing locks of linear bearing structure along its entire length $L_0$, m.

The specified result is achieved also due to the fact that linear force $N_1$, N/m, of acceleration and/or deceleration of linear flywheels is applied uniformly along entire length thereof via linear electromagnetic drives.

The specified result is guaranteed also due to the fact that during operation of general planetary vehicle, along the entire length of its linear flywheels, linear force $N_1$, N/m, of their acceleration and/or deceleration, is regulated with regard to the rated value of that linear force $N_0$, N/m, within the range determined by the ratio:

$$0,9 \leq N_1/N_0 \leq 1,1 \qquad (12)$$

Attaining the given task is secured by the fact that, as part of payload, in the amount of 0,1-10% of its mass $m_3$, kg, liquid and/or gaseous ballast uniformly loaded along the entire length $L_0$, m, of linear bearing structure, is used.

The specified result is achieved also due to the fact that, as ballast, ecologically friendly to planet Earth substances and materials are used: water and/or compressed, and/or liquid air and/or oxygen, and/or nitrogen.

Additional subject of the present invention is use of ballast during lifting (ascent) of general planetary vehicle.

**Brief description of drawings**

The essence of the present invention is clarified with use of drawings, Figs. 1 - 28, which illustrate the following:

Fig. 1 - schematic view of general planetary geospatial transportation complex by Yunitski on planet surface in plane parallel to plane of the equator - view from space over the planet from the equator side;

Fig.2 - schematic view of general planetary geospatial transportation complex by Yunitski - general view from space over one of poles of Earth (embodiment at launch deployment on launch overpass;

Fig.3 - schematic view of general planetary geospatial transportation complex by Yunitski - general view from space over one of poles of Earth (embodiment at launch deployment in liquid of ocean);

Fig.4 - schematic view of general planetary geospatial transportation complex by Yunitski - general view from space over one of poles of Earth (embodiment at launch deployment in gaseous environment of planetary atmosphere);

Fig.5 - schematic drawing of general view of linear bearing structure of general planetary vehicle with outside transportation compartments (embodiment);

Fig.6 - schematic drawing of built-in transportation compartments of linear bearing structure of general planetary vehicle - cross section (embodiment);

Fig.7 - schematic drawing of general view of general planetary geospatial transportation complex by Yunitski on launch overpass - cross section (embodiment);

Fig.8 - schematic drawing of general view of linear bearing structure of general planetary transportation system on launch overpass with outside transportation compartments - side view (embodiment);

Fig.9 - schematic drawing of general view of positioning and fastening in liquid of ocean of launch overpass (embodiment);

Fig. 10 - schematic view of prelaunch position and fastening of linear bearing structure of general planetary vehicle in liquid of ocean (embodiment);

Fig. 11 - schematic view of prelaunch position and fastening of linear bearing structure of general planetary vehicle in gaseous environment of planetary atmosphere (embodiment);

Fig. 12 - phases of ascent of general planetary vehicle to circular orbit (embodiment);

Fig. 13 - schematic view of approach (rendezvous) of general planetary vehicle with orbital circular (seizing planet) space complex (embodiment);

Fig. 14 - schematic view of docking of general planetary vehicle with orbital space complex (embodiment);

Fig. 15 - schematic drawing of block-diagram of interaction of control and communication systems with systems of magnetic and/or electromagnetic suspension, systems of linear electromagnetic drives of the first flywheel and the second flywheel with power supply source;

Fig. 16 - schematic drawing of distribution of radial linear lifting (heave) force and axial force in linear bearing structure;

Fig. 17 - schematic drawing of distribution of forces on structural members of general planetary vehicle in the moment of launch from planet;

Fig. 18 - schematic drawing of linear flywheel in the form of multilayer endless belt - cross section (embodiment);

Fig.19 - schematic drawing of telescopically interconnected rigid units of linear bearing structure of general planetary vehicle - general view (embodiment);

Fig.20 - schematic drawing of interconnected by bellows rigid units of linear bearing structure of general planetary vehicle - general view (embodiment).

Item numbers on drawings:

1 - planet 1;

2 - section line of planet surface received by plane parallel to plane of the equator;

3 - plane parallel to plane of the equator;

4 - plane of the equator;

4.1 - the equator of planet;

5 - general planetary vehicle (GPV);

6 - launch overpass;

6.1 - pillars - supports;

6.2 - superstructures;

6.3 - network passages;

6.4 - floating support;

6.5 - counterweight;

6.6 - tension cable;

7 - linear bearing structure of GPV, encircling the planet;

8 - pressure hull of GPV;

9 - vacuum channel of linear bearing structure of GPV;

9.1 - first vacuum channel;

9.2 - second vacuum channel;

10 - endless linear flywheel, encircling the planet;

10.1 - first endless linear flywheel;

10.2 - second endless linear flywheel;

10.3 - closed multilayer endless flywheel belt;

11 - system of magnetic and/or electromagnetic suspension of endless linear flywheel;

11.1 - system of magnetic and/or electromagnetic suspension of first endless linear flywheel;

11.2 - system of magnetic and/or electromagnetic suspension of second endless linear flywheel;

12 - system of linear electromagnetic drive of endless linear flywheel;

12.1 - system of linear electromagnetic drive of first endless linear flywheel;

12.2 - system of linear electromagnetic drive of second endless linear flywheel;

13 - planned circular orbit;

14 - payload of GPV;

15 - transportation compartments of GPV;

15.1 - built-in transportation compartments;

15.2 - detachable (mounted) transportation compartments;

16 - linear power supply source;

17 - control system;

18 - energy communications system;

19 - locks for fixing of linear bearing structure;

20 - liquid of planetary ocean;

21 - planetary ocean bed;

21.1 - anchoring block on planetary ocean bed;

21.2 - anchoring block on hard surface of planet;

22 - pontoon means;

23 - gaseous environment of planetary atmosphere;

24 - balloon;

25 - linear ballast system, covering the planet;

26 - ballast;

27 - unit of pressure hull of GPV;

28 - telescopic connection of units of pressure hull of GPV;

29 - bellow;

30 - orbital circular (ringing around planet) complex.

$h$, m - altitude of launch overpass;

$H$, m - altitude of planned circular orbit;

$L_0$, m - length of linear bearing structure;

R, m - radius of planet in plane of arranging launch overpass;

$V_{eh}$, m/s - first cosmic velocity at altitude $h$, m;

$V_{1H}$, m/sec - first cosmic velocity at altitude $H$, m

$h_v$, m - launch depth of GPV at launch in liquid of planetary ocean;

$R_v$, m - radius of planet in plane of arranging GPV in liquid of planetary ocean;

$V_{vh}$, m/sec - first cosmic velocity at launch depth $h_v$, m;

$\rho_{1v}$, kg/m$^3$ - launch density of GPV at launch depth $h_v$, m;

$\rho_2$, kg/m$^3$ - density of liquid of planetary ocean at launch depth $h_v$, m;

$h_l$, m - launch altitude of GPV at launch in gaseous environment of planetary atmosphere;

$R_l$, m - radius of planet in plane of arranging GPV in gaseous environment of planetary atmosphere;

$V_{lh}$, m/sec - first cosmic velocity at launch altitude $h_l$, m;

$\rho_{1l}$, kg/m$^3$ - launch density of GPV at launch altitude $h_l$, m;

$\rho_3$, kg/m$^3$ - density of gaseous environment of planetary atmosphere at launch altitude $h_l$, m;

$V_0$, m/sec - acceleration rate of one of linear flywheels;

$P$, N, - centrifugal force;

$N$, N - force of longitudinal stretching of GPV;

$r_p$, m, - reference radius of orbit of one of linear flywheels;

$R_e$, m, - radius of the equator of planet 1;

$\varphi$, rps - angular velocity of one of linear flywheels;

$\dot{r}_p$, m/sec, - radial velocity of GPV;

$\varphi$, °, - turning angle of orbit of one of linear flywheels;

$\delta$, °, - center angle;

$F_1$, N, and $F_2$, N, - elastic forces, acting on ends of a member corresponding to arc with center angle $\delta$, °, of linear

bearing structure of GPV;

$F$, N, - equivalent elastic force in element corresponding to arc with center angle δ, °, of linear bearing structure of GPV;

$G$, N, - planetary gravity force;

$Q$, N, - drag force of gaseous environment of planetary atmosphere;

$X$ and $Y$ - x-axis and y-axis, respectively.

## Embodiments of invention

The essence of the claimed invention is further presented in a closer detail as follows.

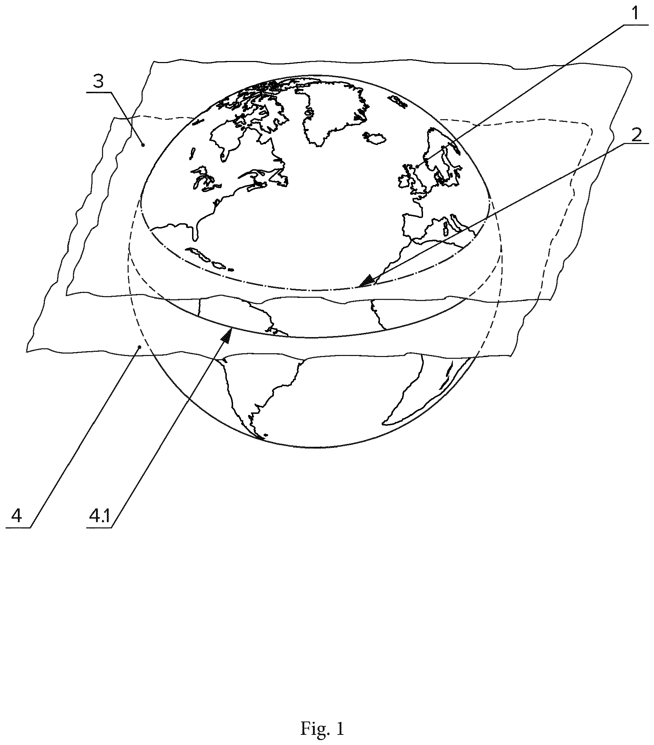

The claimed general planetary geospatial transportation complex by Yunitski (see Figs.1 - 4 and Figs.7 - 11) comprises general planetary vehicle 5 encircling the planet 1 along the line 2 of the planet 1 surface cross-section by the plane 3 parallel to plane 4 of the equator 4.1, fastened, *according to the first variant (embodiment) of the claimed invention,* on launch overpass 6 of altitude $h$, m, defined by the ratio:

$$10^{-7} \leq h/R \leq 10^{-4}, \qquad (1)$$

where R, m, - radius of planet 1 in plane 3 of arranging launch overpass 6.

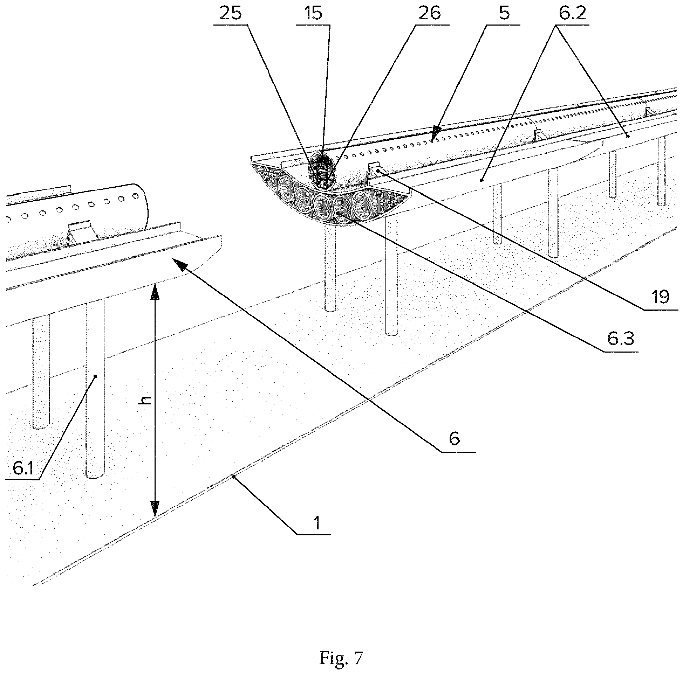

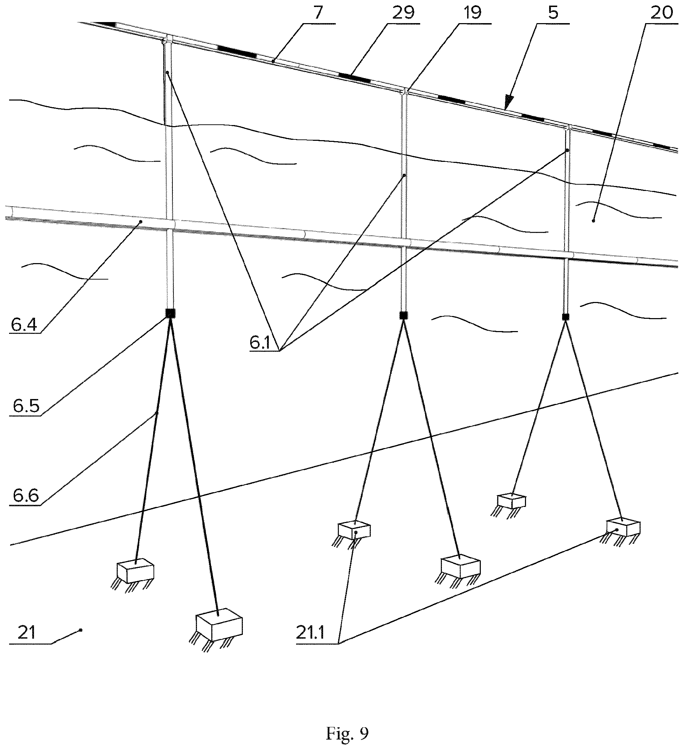

Alternatively, specific launch overpass 6 can be constructed according to any existing technologies of building overpasses, for example, manufactured according to SkyWay technology, which is based on use, as bearing structure, of continuous prestressed track structure, positioned along the equator 4.1. Altitude of launch overpass 6 depending on relief varies from several meters to several hundred meters and may include (see Fig.7) columns - supports 6. 1, connected to each other by span structures 6.2 with network passages 6.3 located therein, made, for example, in the form of transport vacuum channels. On ocean spaces (see Fig.9), and they amount to 76% of the length of the equatorial line of the planet Earth, launch overpass 6 may represent an annular (circular) support bearing structure, also comprising columns - supports 6.1 fixed at certain depth with use of floating support 6.4, embodied, e.g., as vacuum tube, and equipped, for example, with counterweights 6.5 of columns - supports 6.1, with tension cables 6.6.

Optimal altitude h, m, of launch overpass 6 is the value determined by the ratio (1). Under these conditions, the costs of manufacturing, maintenance and operation of general planetary vehicle 5 are minimized.

Decrease in altitude h, m, of launch overpass 6 below the lower boundary of value $h/R$ = $10^{-7}$, defined by the ratio (1), i.e. at $h/R$ < $10^{-7}$, does not allow to meet requirements on reduction of costs for construction of launch overpass 6 while adhering to the design assignment of general planetary vehicle 5, whereas increase of its altitude h, m, above the upper boundary of value $h/R$ = $10^{-4}$, defined by the ratio (1), i.e. at $hi\,R$ > $10^{-4}$, does not allow to reach maximum altitude of positioning launch overpass 5 above surface of planet 1 (see Figs.7 - 9).

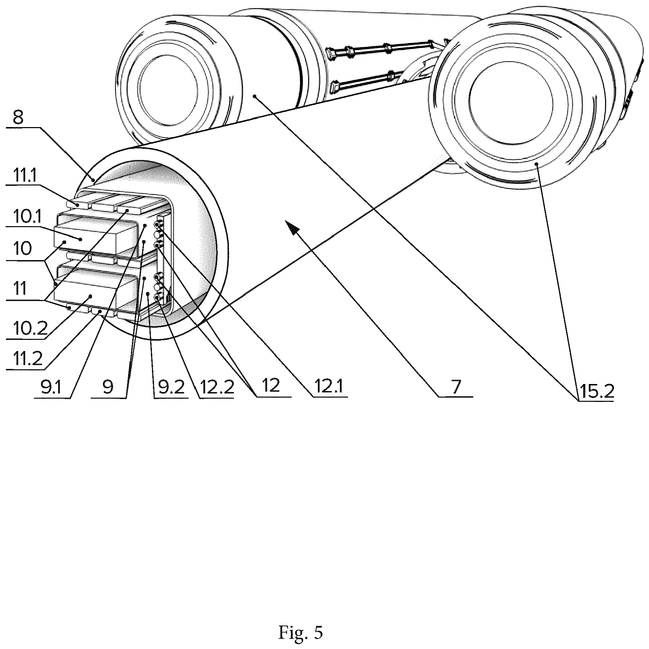

Hereby, general planetary vehicle 5 (see Figs. 5-7) represents a linear bearing structure 7 of length $L_0$,m, encircling planet 1, comprising pressure hull 8 with at least two vacuum channels 9, respectively, 9.1 and 9.2, also encircling planet 1, with encircling planet 1 endless linear flywheels 10, respectively, 10.1 and 10.2, positioned therein. Hereby, first linear flywheel 10.1 is arranged in first vacuum channel 9.1 and second linear flywheel 10.2 is arranged in second vacuum channel 9.2.

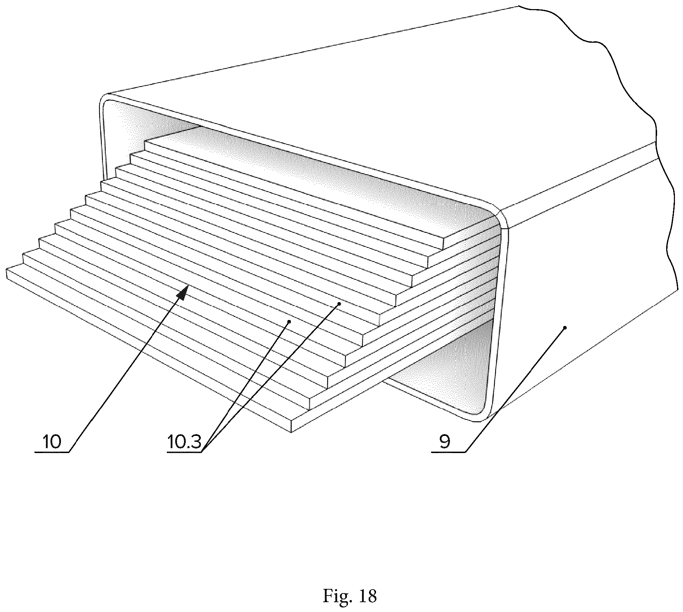

By linear flywheel 10, is meant a seizing planet 1 giant annular closed rim in the form of open torus rotatably mounted around the joint with planet 1 center of mass. Linear flywheel 10 may be realized in various technical embodiments, for instance, as closed multilayer endless belt 10.3, which represents a kind of rotor of linear electromagnetic motor with linear electromagnetic drive (see Fig.18). Thereby, its separate belts, jointly shaping up closed multilayer endless belt 10.3, will be configured for possibility of elastic elongation under stretching force or corresponding displacement of the layers of endless belt 10.3 with respect to each other.

Both linear flywheels 10.1 and 10.2 are contactlessly positioned in relation to walls of the relevant vacuum channel 9.1 or 9.2, and equipped with the systems of magnetic and/or electromagnetic suspension 11, respectively 11.1 and 11.2, and linear electromagnetic drives 12, accordingly, 12.1 and 12.2. Hereby, systems of magnetic and/or electromagnetic suspension 11 and linear electromagnetic drives 12 are configured to accelerate linear flywheels 10 up to velocity $V_0$, m/sec, determined by the ratio:

$$1,1 \leq V_0/V_{eh} \leq 5, \qquad (2)$$

where $V_{eh}$, m/sec, - first cosmic velocity at altitude $h$, m.

Acceleration of at least one of linear flywheels 10 up to velocity $V_0$, m/sec, determined from ratio (2), makes it possible to achieve, at minimum required energy consumption, balancing of attraction force from planet towards general planetary vehicle 5 and its subsequent launch into space with lifting to planned circular orbit 13 of altitude H, m, and reaching of first cosmic (circumferential around planet 1) velocity $V_{1H}$, m/sec, by pressure hull 8 of linear bearing structure 7 of general planetary vehicle 5 at planned circular orbit 13 of altitude H, m.

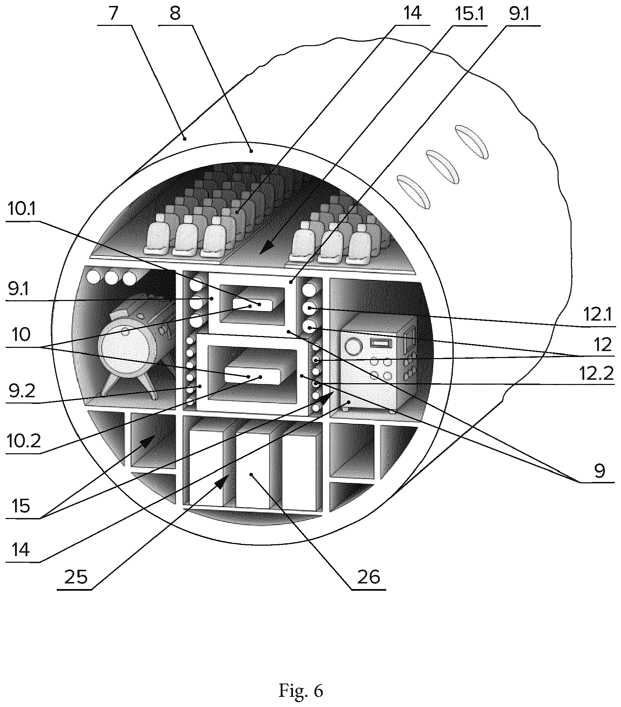

Thus, the optimum velocity $V_0$, m/sec, of acceleration of at least one of linear flywheels 10 to provide accumulation of kinetic energy and the launch amount (angular momentum) of motion sufficient to launch general planetary vehicle 5 and ensure it enters space into planned circular orbit 13 with payload 14 (see Fig.6) reaching first cosmic velocity $V_{1H}$, m/sec, is a value determined by the ratio (2). Under the specified limits, energy costs necessary to ensure the operability of general planetary vehicle 5 are minimized.

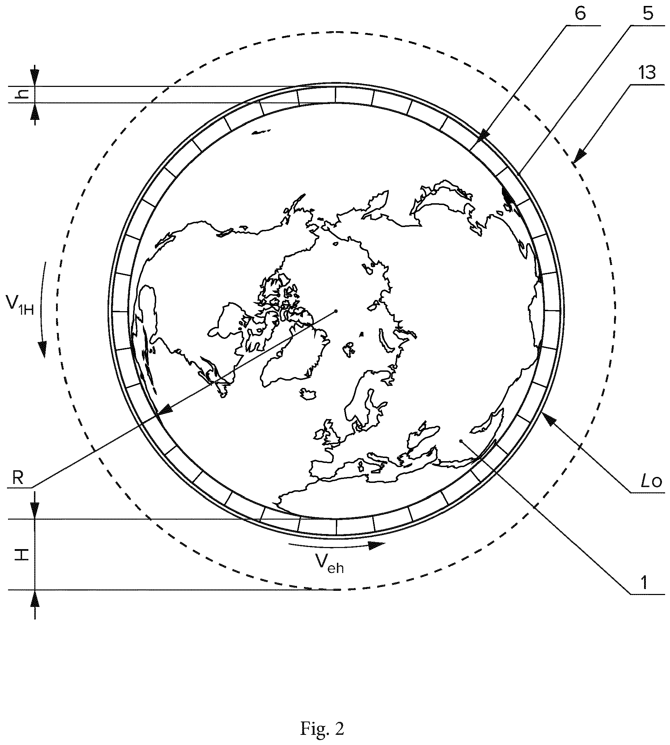

Reduction in velocity $V_0$, m/sec, of acceleration of at least one of linear flywheels 10 below the lower boundary $V_0/V_{eh} = 1,1$, determined by the ratio (2), i.e. at $V_0/V_{eh} < 1,1$, does not allow to meet the requirements of stable and reliable operation of general planetary vehicle 5 at launch, in dense atmosphere, as well as limits the altitude of cosmic orbit on which general planetary vehicle 5 can be inserted, as well as the circumferential (orbital) velocity of linear bearing structure 7, and, correspondingly, mass of payload 14 - passengers and cargoes - inserted into planned circular orbit 13 (see Fig.2).

Increase in velocity $V_0$, m/sec, of acceleration of at least one of linear flywheels 10 above the upper boundary of value $V_0/V_{eh} = 5$, determined by the ratio (2), that is, at $V_0/V_{eh} > 5$, leads to unjustified increase in energy costs required to ensure the operability of general planetary vehicle 5 in accordance with the design assignment. This is due to excess kinetic energy of flywheels 10 at launch, which can lead to the destruction of linear structure 7 due to its excessive elongation (increase in the diameter of ring encircling planet 1) in the process of entering a critically high orbit, that is, due to excessive increase in altitude of cosmic orbit onto which general planetary vehicle 5 and, accordingly, the payload 14 can be inserted.

Linear bearing structure 7 is equipped with transportation compartments 15, both built-in - 15.1, and detachable (mounted) - 15.2 (see Figs.5 - 8) and embodied with possibility of extension without loss of continuity, defined by the ratio:

$$1,01 \leq L_H/L_0 \leq 1,25, \qquad (3)$$

where $L_H$, m, - length of linear bearing structure 7 on planned circular orbit 13 of altitude H, m.

The range of elastic extension of linear bearing structure 7 without loss of continuity indicated in the ratio (3) is due to the range of change in length $L_0$, m of linear bearing structure 7 in launch state and length $L_H$, m, of this linear bearing structure 7 on planned circular orbit 13 of altitude $H$, M.

Embodiment of linear bearing structure 7 and, accordingly, of general planetary vehicle 5 with possibility of their elastic extension without loss of continuity with values of ratio (3) $L_H/L_0 < 1,01$, does not allow to put linear bearing structure 7 to planned circular orbit 13 of assigned altitude H, M. Embodiment of linear bearing structure 7 with possibility of elastic extension without loss of continuity with values in the ratio (3) ranging like $L_H/L_0 > 1,25$, penalizes rigidity and strength of the structure, as well as reliability of general planetary vehicle 5 as a whole.

In its turn, linear flywheels 10, respectively, 10.1 and 10.2, have corresponding masses $m_1$ and $m_2$, kg, defined from the ratio:

$$0,1 \leq m_1/m_2 \leq 10, \qquad (4)$$

Embodiment of linear flywheels 10.1 and 10.2 with corresponding masses $m_1$ и $m_2$, kg, specified in the ratio (4), is conditioned by the modes of realization of processes of launch into space and return landing on planet 1 of general planetary vehicle 5 with use of launch kinetic energy accumulated therein and launch amount (angular momentum) of motion.

Optimal for carrying out launch of general planetary vehicle 5 into space on planned circular orbit 13 of assigned altitude H, m, and ensuring all stages of its motion, including launch, lifting, hovering on planned circular orbit 13 with the planned circumferential (orbital) velocity $V_{1H}$, m/sec, and return to planet 1, appears to be embodiment of linear flywheels 10.1 and 10.2 with corresponding masses $m_1$ and $m_2$, kg, indicated in the ratio (4).

Embodiment of linear flywheels 10.1 and 10.2 with masses $m_1$ and $m_2$, kg, ratio of which is less than 0.1 or more than 10, leads either to reduction in efficiency of general-planet vehicle 5 as a whole, or to significant and impractical increase of velocity (rotation) of at least one of linear flywheels at the moment of launch of general planetary vehicle 5 from planet 1, which causes considerable complication and increase of cost of realization of the entire project on transportation complex. In addition, this will lead to additional losses of significant portion of energy when it is switched from one flywheel, which is slowed, with its drive is operating in generator mode, to another flywheel, which at this time accelerates in counter-direction.

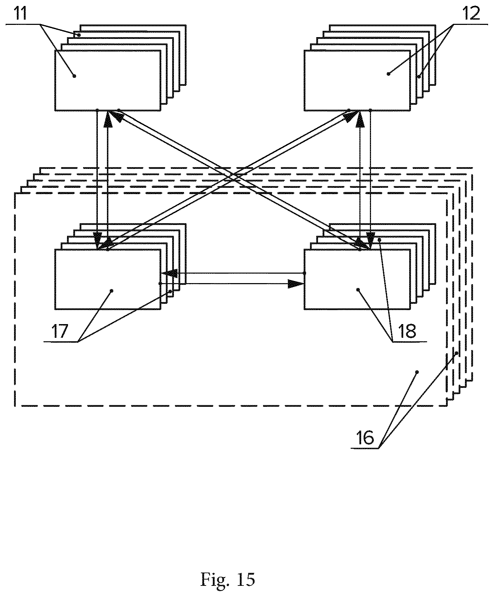

Systems 11 of magnetic and/or electromagnetic suspension and drives 12 of linear flywheels 10 along their

entire length $L_0$ are connected to linear power supply source 16, embodied, for example, in the form of linear (running along linear bearing structure 7) power supply system, capable of including a variety of possible combinations of generating power systems available on planet 1, through control system 17 and power communication system 18 (see Fig. 15). Hereby, all systems of general planetary geospatial transportation complex are made in the form of a complex uniformly distributed along the whole length of $L_0$, m, of linear bearing structure 7 of general planetary vehicle 5 and, connected with each other in a respective single system, subsystems, which ensure performance of functions of each system on any separate section of general planetary geospatial transportation complex and - as a whole - along the entire length $L_0$.

General planetary vehicle 5 is also equipped with fixing locks 19 for fastening linear bearing structure 7 to the launch overpass 6 along the entire length $L_0$, m, which automatically operate and release linear bearing structure 7 at the moment of its launch from planet 1 and fix the position of linear bearing structure 7 of general planetary vehicle 5 in the initial position when it returns to planet 1 (see Figs.7 - 9). Thanks to presence of fixing locks 19 for attachment of linear bearing structure 7 it is possible, due to acceleration to velocity $V_0$, m/sec, of at least one of linear flywheels 10, to accumulate energy required and sufficient for lifting of general planetary vehicle 5 to planned circular orbit 13 of altitude H, m (see Figs.2, 4, 12 and 13) and to obtain orbital velocity $V_{1H}$, m/sec, by linear bearing support structure 7.

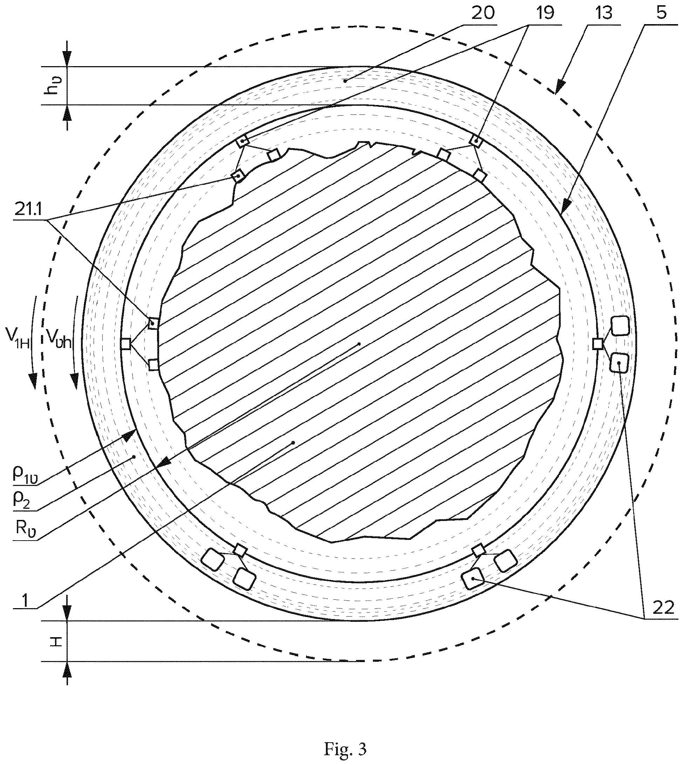

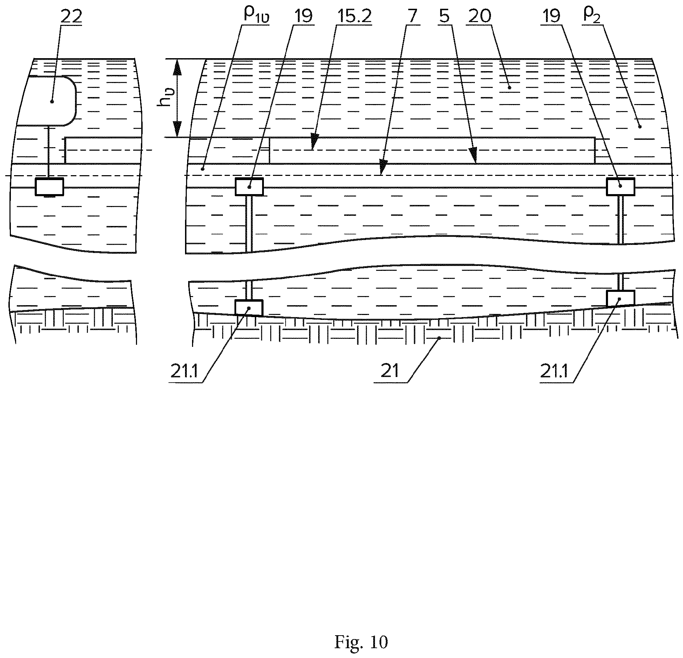

The above mentioned result is also achieved by the fact that the claimed general planetary geospatial transportation complex by Yunitski (see Figs.1 - 6) includes general planetary vehicle 5 encircling the planet 1 along the line 2 of the planet 1 surface cross-section by the plane 3 parallel to plane 4 of the equator 4.1, fastened, *according to the second variant (embodiment) of the claimed invention,* (See Figs.3 and 10), by fixing locks 19 located in liquid 20 of ocean of planet 1 at launch depth $h_v$, m, defined by the ratio:

$$10^{-7} \le h_v/R_v \le 10^{-4}, \qquad (5)$$

where $R_v$, m, - radius of planet 1 in plane 3 of arranging general planetary vehicle 5 in liquid 20 of ocean of planet 1.

Location of general planetary vehicle 5 in liquid 20 of ocean of planet 1 at launch depth $h_v$, m, indicated in the ratio (5) is due to optimization of technology for construction and maintenance of general planetary vehicle 5 at its launch from liquid 20 of ocean.

Optimal value of launch depth $h_v$, m, of immersion of general planetary vehicle 5 into liquid 20 of planet 1 ocean is the value determined by the ratio (5). Under these conditions, the manufacturing, maintenance and operation costs of general planetary vehicle 5 are minimized and buoyancy of liquid 20 is maximized.

Decrease in launch depth $h_v$, m, of submerging general planetary vehicle 5, below the lower boundary of the ratio (5) $h_v/R_v = 10^{-7}$, that is, when it will have value lower than $10^{-7}$, does not allow to eliminate possible negative impact on operation of general planetary vehicle 5 as a result of possible atmospheric wind, seismicity, and other natural factors that may cause, inter alia, roughness of liquid 20 on the ocean surface, and increase of its value above the upper boundary, determined by the ratio (5), of the ratio (5) $h_v/R_v = 10^{-4}$, i.e. when it will have value above $10^{-4}$, does not allow to effectively perform, at such substantial depth, high-tech maintenance of general planetary vehicle 5 and meet the requirement to reduce the cost of its operation.

At the same time, similar to the first variant of the claimed invention, it is characteristic that general planetary vehicle 5 is, in this case, represents a linear bearing structure 7 of length $L_0$, m, encircling the planet 1, comprising pressure hull 8 with at least two vacuum channels 9, respectively, 9.1 and 9.2, also encircling planet 1, with endless linear flywheels 10 fastened therein. Hereby, first linear flywheel 10.1 is arranged in first vacuum channel 9.1 and second linear flywheel 10.2 is arranged in second vacuum channel 9.2.

By linear flywheel 10, as in the first embodiment of the invention, is meant a seizing planet 1 giant annular closed rim in the form of open torus rotatably mounted around the joint with planet 1 center of mass.

Both linear flywheels 10.1 and 10.2 are contactlessly positioned in relation to walls of the relevant vacuum channel 9.1 or 9.2, and equipped with the systems of magnetic and/or electromagnetic suspension 11, respectively 11.1 and 11.2, and linear electromagnetic drives 12, accordingly, 12.1 and 12.2, of first and second linear flywheels 10.1 and 10.2, respectively (see Fig.5 and Fig.6). Hereby, systems of magnetic and/or electromagnetic suspension 11 and linear electromagnetic drives 12 are configured to accelerate linear flywheels 10 up to velocity $V_0$, m/sec, determined by the ratio:

$$1,1 \le V_0/V_{vh} \le 5, \qquad (6)$$

where $V_{vh}$, m/sec, - first cosmic velocity at launch depth $h_v$, m.

Acceleration of at least one of linear flywheels 10 up to velocity $V_0$, m/sec, determined from ratio (6), makes it possible to achieve balancing of attraction force from planet 1 towards general planetary vehicle 5 and its launch into space at minimum required energy consumption.

Thus, the optimum velocity $V_0$, m/sec, of acceleration of at least one of linear flywheels 10 to provide accumulation of kinetic energy and the launch amount (angular momentum) of motion sufficient to launch general planetary vehicle 5 and ensure it enters space into planned circular orbit 13 from thickness of liquid 20 of ocean of planet 1, is a value determined by the ratio (6). Under the specified limits, energy costs necessary to ensure the operability of general planetary vehicle 5 are minimized.

Reduction in velocity $V_0$, m/sec, of acceleration of at least one of linear flywheels 10 below the lower boundary $V_0/V_{vh}$ = 1,1, determined by the ratio (6), i.e. at $V_0/V_{vh}$ < 1,1, does not allow to meet the requirements of stable and reliable operation of general planetary vehicle 5 at launch, in thickness of liquid 20, in dense atmosphere, as well as limits the altitude of cosmic orbit on which general planetary vehicle 5 can be inserted, as well as the circumferential (orbital) velocity $V_{1H}$, m/sec, of linear bearing structure 7.

Increase in velocity $V_0$, m/sec, of acceleration of at least one of linear flywheels 10 above the upper boundary $V_0/V_{vh}$ = 5, determined by the ratio (6), i.e. at $V_0/V_{vh}$ > 5, leads to unjustified hike in energy costs required to ensure the operability of general planetary vehicle 5 according to the design assignment and excessively increases altitude H, m, of planned circular orbit 13.

Linear bearing structure 7, similar to the first embodiment of the invention, is also provided (see Fig.5, Fig.6 and Fig.10) with transportation compartments 15 and configured to be extended without losing its continuity as determined from the ratio (3):

$$1,01 \leq L_H/L_0 \leq 1,25.$$

Substantiation of the range of elastic extension of linear bearing structure 7 without loss of continuity indicated in the ratio (3) is similar to the justification of this range given as such for the first embodiment and due to the range of change of length $L_0$, m, of linear bearing structure 7 in launch state at launch depth $h_v$, m, and length $L_H$, m, of this linear bearing structure 7 on planned circular orbit 13 of altitude H, M.

In turn, linear flywheels 10, respectively, 10.1 and 10.2, by analogy with justification of the choice of value of their masses $m_1$ and $m_2$, kg, specified in the first variant of embodiment of general planetary vehicle 5, have the corresponding masses $m_1$ and $m_2$, kg, defined by the ratio (4):

$$0,1 \leq m_1/m_2 \leq 10$$

Embodiment of linear flywheels 10.1 and 10.2 with masses $m_1$ and $m_2$, kg, ratio of which is less than 0.1 or more than 10, leads either to reduction of efficiency of general planetary vehicle 5, or to significant and impractical increase of velocity (rotation) of at least one of linear flywheels at the moment of launch of general planetary vehicle 5 from planet 1, which leads to considerable complication and increase of cost of realization of the entire project on transportation complex.

Hereby, general planetary vehicle 5, according to the second variant of the claimed invention, is embodied with launch density $\rho_{1v}$, kg/m³, defined by the ratio:

$$0,5 \leq \rho_2/\rho_{1v} \leq 2, \qquad (7)$$

where $\rho_2$, kg/m³, - density of liquid 20 of ocean of planet 1 at launch depth $h_v$, m.

In this case, launch density $\rho_{1v}$, kg/m³, of general planetary vehicle 5 should be understood to mean the mass of the structure in unit volume of general planetary vehicle 5 in its prelaunch state at launch depth $h_v$, m, in liquid 20 of ocean of planet 1.

Embodiment of general planetary vehicle 5 with launch density $\rho_{1v}$, kg/m³, indicated in the ratio (7), is due to optimization of technology for construction and maintenance of general planetary vehicle 5 while ensuring its location in liquid 20 at assigned launch depth $h_v$, m, in global ocean.

Optimum launch density $\rho_{1v}$, kg/m³, for the second embodiment of general planetary vehicle 5 is the value determined by the ratio (7). Under these conditions, the costs of manufacturing, maintenance and operation of general planetary vehicle are minimized 5.

Reduction in launch density $\rho_{1v}$, kg/m³, of general planetary vehicle 5 beyond the upper boundary of the ratio (7) $\rho_2/\rho_{1v}$ = 2, that is at $\rho_2/\rho_{1v}$ > 2, does not allow efficient use for prelaunch maintenance of general planetary vehicle 5 at assigned launch depth $h_v$, m, due to its excessive buoyancy (floatation miss), thereby increasing the likely negative impact thereon from possible roughness on the ocean surface, whereas increasing launch density $\rho_{1v}$, kg/m³, below the lower boundary of the ratio (7) $\rho_2/\rho_{1v}$ = 0,5, that is at $\rho_2/\rho_{1v}$ < 0,5, does not allow to meet requirements on reduction of costs for maintenance of general planetary vehicle 5 at a considerable depth in the ocean of planet 1 because of its insufficient (negative) buoyancy.

In this embodiment, drives 12 of linear flywheels 10 are also connected to power supply source 16 through control system 17 and power communication system 18 (see Fig. 15) and organized in a manner similar to that described in the first embodiment of the invention for operation and realization of the respective systems of general planetary geospatial transportation complex.

Besides, similar to the first variant of the claimed invention, general planetary geospatial transportation complex by Yunitski, as per its second embodiment, is also equipped with fixing locks 19 (see Fig. 10) for fastening of linear bearing structure 7 in liquid 20 of ocean, for example, to floating supports 6.4, and/or to anchors 21.1, arranged at bed 21 of ocean along their entire length $L_0$, m. Anchors 21.2 mounted on hard surface of planet 1 may be also used to secure linear bearing structure 7 in liquid 20 of ocean, such as in channels and/or along straits. Hereby, tension cables 6.6, connecting anchors 21.2 with locks 19, extend from anchors 21.2 from surface of planet 1 under surface of liquid 20 of ocean. Locks 19 automatically operate and release linear bearing structure 7 at the moment of its launch from planet 1 and fix position of linear bearing structure 7 of general planetary vehicle 5 in initial position at its return to planet 1. Thanks to presence of locks 19 for fastening of linear bearing structure 7, it is possible, due to acceleration to velocity of $V_0$, m/sec, of at least one of linear flywheels 11, to accumulate energy necessary and sufficient for lifting of general planetary vehicle 5 to planned circular orbit 13 of altitude H, m.

According to the second variant of the claimed invention, it is expedient that launch density $\rho_{1v}$, kg/m$^3$, of general planetary vehicle 5 was secured with pontoon means 22 connected with fixing locks 19 of linear bearing structure 7 installed all over its length $L_0$, m, and which are fastened in liquid 20 of ocean and/or at its bed 21 by anchors 21.1 (see Figures 3 and 10) and responsible for prelaunch arrangement of general planetary vehicle 5 in liquid 20 of ocean at launch depth $h_v$, m.

The use of pontoon means 22 to compensate launch density $\rho_{1v}$, kg/m$^3$, of general planetary vehicle 5 up to design limits indicated in the ratio (7) makes it possible to simplify its design and increase its technological effectiveness and efficiency (see Fig.3 and Fig.10).

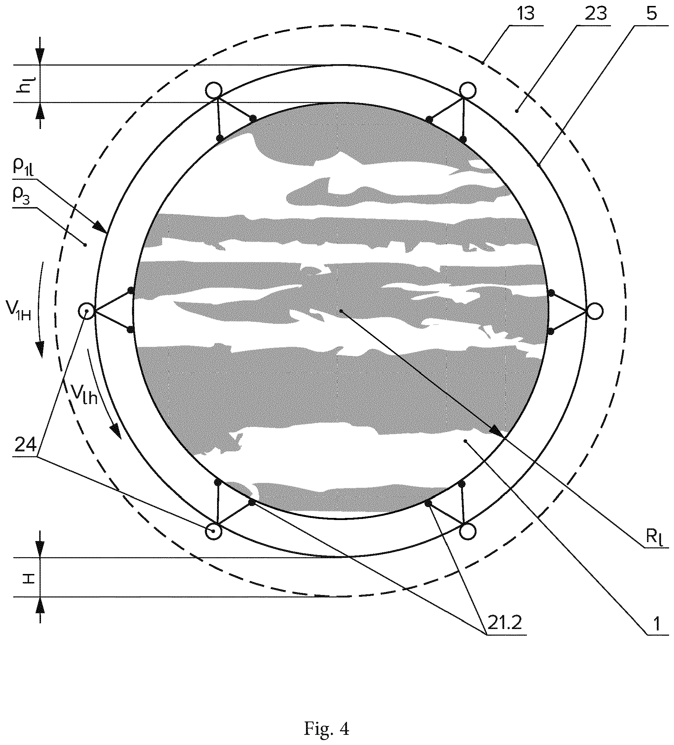

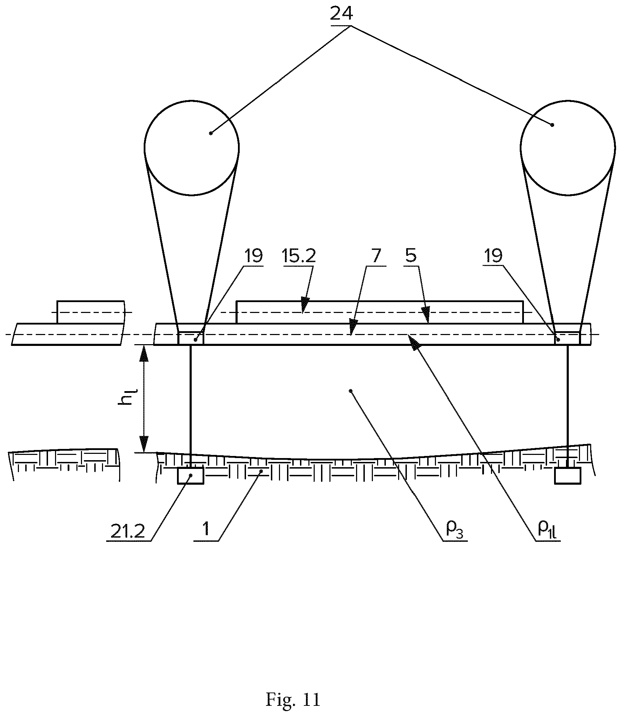

The above result is also achieved thanks to the fact that the proposed general planetary geospatial transportation complex of Yunitski includes general planetary vehicle 5, covering planet 1 along the line 2 of surface section of planet 1 by the plane 3 parallel to the plane 4 of the equator 4.1, fixed, *according to the third variant of the invention* (see Figs.4 and 11), in gaseous environment 23 of atmosphere of planet 1 at launch altitude $h_l$, m, determined by the ratio:

$$10^{-7} \le h_l/R_l \le 10^{-2}, \qquad (8)$$

where $R_l$, m, - radius of planet 1 in plane 3 of arranging general planetary vehicle 5 in gaseous environment 23 of atmosphere of planet 1.

Positioning of general planetary vehicle 5 in gaseous environment 23 of atmosphere of planet 1 at launch altitude $h_l$, m indicated in the ratio (8), is due to optimization of technology of construction and maintenance of general planetary vehicle 5 at its "atmospheric" launch.

Optimal value of launch altitude $h_l$, m, of lifting general planetary vehicle 5 above surface of planet 1 is the value determined by the ratio (8). Under these conditions, the costs of manufacturing, maintenance and operation of general planetary vehicle 5 are minimized.

Decrease in value of launch altitude $h_l$, m, of location of general planetary vehicle 5 above the surface of planet 1 below the lower boundary of the ratio (8) $h_l/R_l = 10^{-7}$ , that is, at $h_l/R_l < 10^{-7}$, does not allow to reduce negative impact on operation of general planetary vehicle 5 due to inhomogeneity of surface relief of planet 1 along the launch location of linear bearing structure 7 throughout its length, and increase of its value above the upper boundary of the ratio $h_l/R_l$ = $10^{-2}$, i.e. at $h_l/R_l > 10^{-2}$, determined by the ratio (8), does not allow to effectively reduce the costs of pre-launch preparation, maintenance and loading of general planetary vehicle 5 at high altitude in more rarefied atmosphere layers of planet 1.

At the same time, according to third variant of the invention, for general planetary geospatial transportation complex by Yunitski, however, similar to both its first and second variants, it is characteristic that general planetary vehicle 5 is, in this case, represents a linear bearing structure 7 of length $L_0$, m, encircling the planet 1, comprising pressure hull 8 with at least two vacuum channels 9, respectively, 9.1 and 9.2, also encircling planet 1, with endless linear flywheels 10 placed therein. Hereby, first linear flywheel 10.1 is arranged in first vacuum channel 9.1 and second linear flywheel 10.2 is arranged in second vacuum channel 9.2.

By linear flywheel 10, as in the first two embodiments of the invention, is meant a seizing planet 1 giant annular closed rim in the form of open torus rotatably mounted around the center of mass of planet 1.

Both linear flywheels 10.1 and 10.2 are contactlessly positioned in relation to walls of the relevant vacuum channel 9.1 or 9.2, and equipped with the systems of magnetic and/or electromagnetic suspension 11, respectively 11.1 and 11.2, and linear electromagnetic drives 12, accordingly, 12.1 and 12.2, of first and second linear flywheels 10.1 and 10.2, respectively (see Fig.5 and Fig.6). Hereby, systems of magnetic and/or electromagnetic suspension 11 and linear electromagnetic drives 12 are configured to accelerate linear flywheels 10 up to velocity $V_0$, m/sec, determined by the ratio:

$$1,1 \leq V_0/V_{lh} \leq 5, \qquad (9)$$

where $V_{lh}$, m/sec, - first cosmic velocity at launch altitude $h_l$, m.

Acceleration of at least one of linear flywheels 10 up to velocity $V_0$, m/sec, determined from ratio (9), makes it possible to achieve balancing of attraction force from planet towards general planetary vehicle 5 and its launch into space at minimum required energy consumption.

Thus, the optimum velocity $V_0$, m/sec, of acceleration of at least one of linear flywheels 10 to provide accumulation of kinetic energy and the amount (angular momentum) of motion sufficient to launch general planetary vehicle 5 and ensure it enters space into planned circular orbit 13 from gaseous environment 23 of atmosphere of planet 1, is a value determined by the ratio (9). Under the specified limits, energy costs necessary to ensure the operability of general planetary vehicle 5 are minimized.

Reduction in velocity $V_0$, m/sec, of acceleration of at least one of linear flywheels 10 below the lower boundary $V_0/V_{vh}$ = 1,1, determined by the ratio (9), does not allow to meet the requirements of stable and reliable operation of general planetary vehicle 5 at launch, in dense atmosphere, and also limits the altitude of cosmic orbit on which general planetary vehicle 5 can be inserted, as well as the circumferential (orbital) velocity $V_{1H}$, m/sec, of linear bearing structure 7.

Increase in velocity $V_0$, m/sec, of acceleration of at least one of linear flywheels 10 above the upper boundary $V_0/V_{vh}$ = 5, determined by the ratio (9), leads to unjustified hike in energy costs required to ensure the operability of general planetary vehicle 5 according to the design assignment and excessively increases altitude H, m, of planned circular orbit 13.

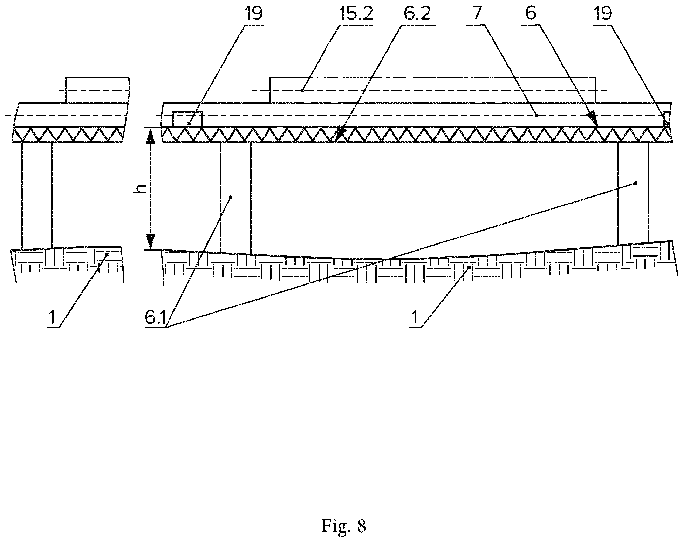

According to the third embodiment of the present invention, linear bearing structure 7, similar to the first two embodiments of the invention, is provided with transportation compartments 15 (see Fig.7 and 8) and can be extended without losing its continuity as determined from the ratio (3):

$$1,01 \leq L_H/L_0 \leq 1,25$$

Substantiation of the range of elastic extension of linear bearing structure 7 without loss of continuity indicated in the ratio (3) is similar to the justification of this range given as such for the first two embodiments of the installation and due to the range of change of length $L_0$, m, of linear bearing structure 7 in launch state (see Fig.4) at launch altitude $h_l$, m, and length $L_H$, m, of this linear bearing structure 7 on planned circular orbit 13 of altitude H, M.

In turn, linear flywheels 10, respectively, 10.1 and 10.2, by analogy with justification of the choice of value of their masses $m_1$ and $m_2$, kg, specified in the first two variants of embodiment of general planetary vehicle 5, have the corresponding masses $m_1$ and $m_2$, kg, defined by the ratio (4):

$$0,1 \leq m_1/m_2 \leq 10$$

Embodiment of linear flywheels 10.1 and 10.2 with masses $m_1$ and $m_2$, kg, ratio of which is less than 0.1 or more than 10, leads either to reduction of efficiency of general planetary vehicle 5, or to significant and impractical increase of velocity (rotation) of at least one of linear flywheels at the moment of launch of general planetary vehicle 5 from planet 1, which leads to considerable complication and increase of cost of realization of the entire project on transportation complex.

Hereby, general planetary vehicle 5 is embodied with launch density $\rho_{1l}$, kg/m$^3$, determined by the ratio:

$$0,1 \leq \rho_3/\rho_{1l} \leq 2, \qquad (10)$$

where $\rho_3$, kg/m$^3$, - density of gaseous environment 23 of atmosphere of planet 1 at launch altitude $h_l$, M. Hereby, it is noteworthy to mention that density $\rho_3$, kg/m$^3$, of atmosphere of any planet 1, containing the atmosphere as on the Earth, will drop as the launch altitude increases $h_l$, m, and under launch density $\rho_{1l}$, kg/m$^3$, of general planetary vehicle 5, in this case, should be understood the mass of structure in unit volume of general planetary vehicle 5, at its prelaunch state at launch altitude $h_l$, m, in gaseous environment 23 of atmosphere of planet 1.

Implementation of general planetary vehicle 5 with launch density $\rho_{1l}$, kg/m$^3$, indicated in the ratio (10), determined by optimization of technology for construction and maintenance of general planetary vehicle 5 while ensuring its location in gaseous environment 23 of atmosphere of planet 1 at assigned launch altitude $h_l$, m.

The optimum launch density $\rho_{1l}$, kg/m³, for the third embodiment of general planetary vehicle 5, is value determined by the ratio (10). Under these conditions, the costs of manufacturing, maintenance and operation of general planetary vehicle 5 are minimized.

Increase in launch density $\rho_{1l}$, kg/m³, of general planetary vehicle 5, beyond the lower boundary of the ratio (10) $\rho_3/\rho_{1l} = 0.1$, that is at $\rho_3/\rho_{1l} < 0.1$, does not allow to effectively use technical parameters of general planetary vehicle 5 for its maintenance in prelaunch state at assigned launch altitude of $h_l$, m, in gaseous environment 23 of atmosphere of planet 1 because of complication in processes of maintenance of general planetary vehicle 5 at considerable altitude (in upper, more rarefied atmosphere layers), and decrease of launch density, $\rho_{1l}$, kg/m³, beyond the upper boundary of the ratio (10) $\rho_3/\rho_{1l} = 2$, that is, at $\rho_3/\rho_{1l} > 2$, determined by the ratio (10), does not allow to reduce negative impact which is rendered on operation of general planetary vehicle 5 by inhomogeneity of surface relief of planet 1 along launch location of linear bearing structure 7 throughout thereof.

Furthermore, in the third embodiment, similar to the first above described two embodiments, drives 12 of linear flywheels 10 are also connected to power supply source 16 through control system 17 and power communication system 18 (see Fig. 15) and organized in a manner similar to that described in these embodiments of the invention for operation and realization of the respective systems of general planetary geospatial transportation complex.

Similar to the first two variants of the invention, general planetary geospatial transportation complex by Yunitski according to third variant, also equipped by fixing locks 19 (see Fig. 11) for fastening linear bearing structure 7 along the entire length $L_0$, m, in liquid 20 of ocean to special floating supports 6.4, or to anchors 21.1 placed on ocean bed 21 and/or to hard surface of planet 1 on anchors 21.2 placed thereupon. Locks 19 automatically operate and release linear bearing structure 7 at the moment of its launch from planet 1 and/or fix position of linear bearing structure 7 of general planetary vehicle 5 in initial position at its return to planet 1. Thanks to presence of locks 19 for fastening of linear bearing structure 7, it is possible, due to acceleration to velocity of $V_0$, m/sec, of at least one of linear flywheels 10, to accumulate energy necessary and sufficient for lifting of general planetary vehicle 5 from launch position in gaseous environment 23 of atmosphere of planet 1 of launch altitude $h_l$, m, to planned circular orbit 13 of altitude $H$, m.

According to the third embodiment (variant) of the invention, it is advantageous that launch density, $\rho_{1v}$, kg/m³, of general planetary vehicle 5 was secured, for example, with balloons 24, connected to fixing locks 19 of linear bearing structure 7 and fixed, for example, in gaseous environment 23 of atmosphere of planet 1, and/or in liquid 20 of ocean, and/or on hard surface of planet 1, respectively, on balloons 24, floating supports 6.4 and/or anchors 21.1, and/or anchors 21.2 along its entire length $L_0$, m, of linear bearing structure 7 and performing pre-launch positioning of general planetary vehicle 5 in gaseous environment 23 of atmosphere of planet 1 at launch altitude $h_l$, M.

Using balloons 24 to compensate launch density $\rho_{1l}$, kg/m³, of general planetary vehicle 5 to design limitations, specified in the ratio (10) will simplify its design and increase its technological efficiency and efficiency (see Fig.11).

For general planetary geospatial transportation complex by Yunitski according to any of the three variants of the present invention, it is distinguishable that transportation compartments 15 may be placed both inside pressure hull 8 of linear bearing structure 7, or fastened outside thereupon, correspondingly, those are built-in transportation compartments 15.1 and detachable transportation compartments 15.2 (see Fig.5 - 8, Fig.10, 11 and 14).

Using outside detachable transportation compartments 15.2 will allow to increase efficiency and lower costs of their maintenance on stages of loading and unloading of general planetary vehicle 5.

It is advantageous to embody general planetary geospatial transportation complex by Yunitski in such a way that general planetary vehicle 5 is provided with a linear ballast system 25 covering the planet 1 and uniformly loaded along its entire length with liquid and/or gaseous ballast 26 (см. фиг.6), placed in special tanks of ballast system 25.

As structure of linear ballast system 25, a portion of interconnected along the entire length $L_0$, m, transportation compartments 15 of linear bearing structure 7 of general planetary vehicle 5, can be used.

Equipping of general planetary vehicle 5 with linear ballast system 25, covering the planet 1 and uniformly loaded along its entire length with liquid and/or gaseous ballast 26, provides balancing of the whole structure and excludes its vibrations at operation during motion of general planetary vehicle 5 from launch moment to rise to planned circular orbit 13 of altitude H, m.

General planetary geospatial transportation complex by Yunitski according to any of the three variants may be embodied in such way, that linear bearing structure 7 of general planetary vehicle 5 is made elastically of elastically deformable material with modulus of elasticity E, Pa, within the following range:

$$10^8 \leq E \leq 5 \times 10^{11} \qquad (11)$$

The range of the modulus of elasticity E, Pa is selected on the basis of strength conditions stipulated by design assignment and the possibility of providing elastic deformation of pressure hull 8 of linear bearing structure 7 without loss of continuity within the range of change of length $L_0$, m, of linear bearing structure 7 from launch state up to its length $L_H$, m, on planned circular orbit 13 of altitude $H$, M.

Embodiment of linear bearing structure 7 and, accordingly, of general planetary vehicle 5 as a whole, from materials with values of modulus of elasticity E, Pa, less than $10^8$ does not allow to ensure their required strength and rigidity.

Embodiment of linear bearing structure 7 and, accordingly, of general planetary vehicle 5 as a whole with possibility of their elastic extension without loss of continuity, from materials with values of modulus of elasticity E, Pa, more than $5 \times 10^{11}$, leads to significant increase of costs for elastic deformation of structural members of general planetary vehicle 5 and reduction of operation efficiency thereof.

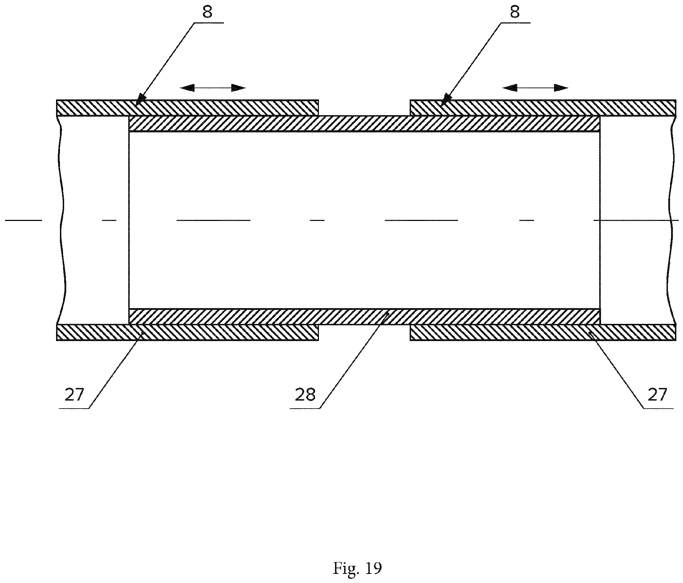

Further, according to any of the three variants of the invention, general planetary geospatial transportation complex by Yunitski can be realized in such a way that pressure hull 8 of linear bearing structure 7 of general planetary vehicle 5 is embodied in the form of units 27 joined to each other by telescopic connections 28 (see Fig. 19).

Embodiment of pressure hull 8 of linear bearing structure 7 of general planetary vehicle 5 in the form of units 27 integrated with each other along the length of telescopic connections 28 allows to reduce power consumption required to provide elastic deformation in longitudinal direction of structural members of general planetary vehicle 5 and expand the range of materials used for manufacture thereof.

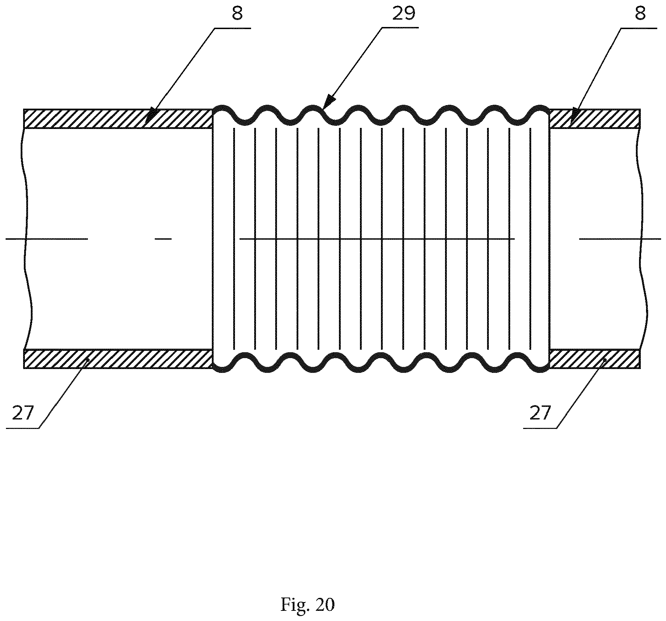

Alternatively, general planetary geospatial transportation complex by Yunitski according to any of the three variants can be realized in such a way that pressure hull 8 of linear bearing structure 7 of general planetary vehicle 5 is embodied in the form of units 27 interconnected with each other by bellows 29 (see Fig.20).

The use of bellows 29 as structural members for interconnecting units 27 of general planetary vehicle 5 also leads to reduction in power consumption, required to ensure linear elastic deformation of structure of pressure hull 8 of general planetary vehicle 5 during its lifting to planned circular orbit 13 of altitude H, m, and increases reliability and durability of the structure as a whole while simplifying it.

In accordance with the initial technical requirements of specific design solution, the achievement of the required value of elasticity of elastically deformable linear bearing structure 7 of general planetary vehicle 5 can be embodied both with combination of the specified structural and technological solutions, and by other known and tested in the art techniques.

The above mentioned result is also achieved by the method of inserting payload from surface of planet 1 into circular orbit of altitude H, m, according to which:

First, the presence of general planetary geospatial transportation complex by Yunitski is guaranteed, including seizing the planet 1 along the line 2 of cross-section of surface of planet 1 by plane 3 parallel to the plane of the equator 4, general planetary vehicle 5 embodied according to any claims 1, 2 and 3;

General planetary vehicle 5, as noted above, is a self-supporting aircraft made in the form of a torus with cross section of up to a few meters, encircling the planet 1 in a plane 3 parallel to the plane of the equator 4. It can exit into space, overcoming the attraction of planet 1, using only the internal forces of the system, without any energetic, mechanical, chemical and other types of environmentally harmful interaction with the environment, that is, it will be extremely environmentally friendly.

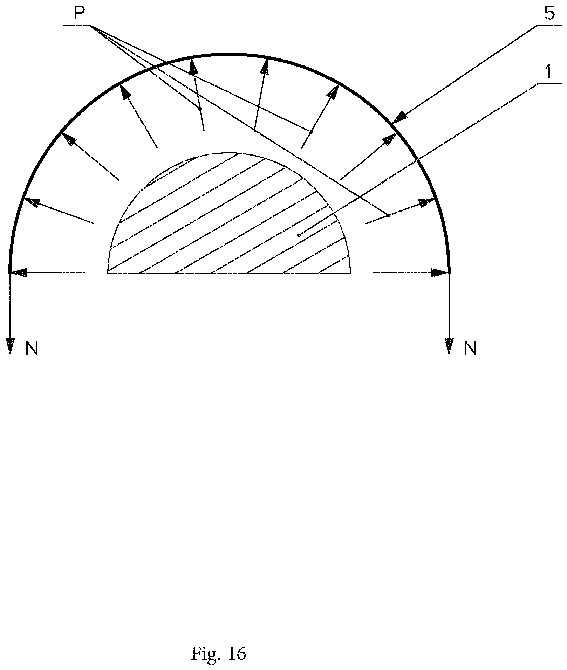

Only tensile cord having infinitesimal cross sizes in relation to length (a ratio about 1:10.000.000), can be a steady self-bearing structure, hence, general planetary vehicle 5 in the longitudinal direction will be always stretched by force $N$, N (see Fig. 16). Therefore, it represents a form of string-type transport technology, and also has gyroscopic flywheel stability (diameter for Earth more than 12 thousand kilometers) due to high velocity $V_0$, m/sec of motion of linear flywheels 10 inside linear bearing structure 7 of length $L_0$, m.

The optimal version of operation of general planetary vehicle 5, which has entered planned circular orbit 13 of altitude H, m, is the state of equilibrium, therefore, all members of its structure as a whole should be in the state of weightlessness. For this purpose, in optimal versions of operation, each linear member of general planetary vehicle 5 must have first cosmic velocity $V_{1H}$, m/sec, on planned circular orbit 13 at altitude H, m.

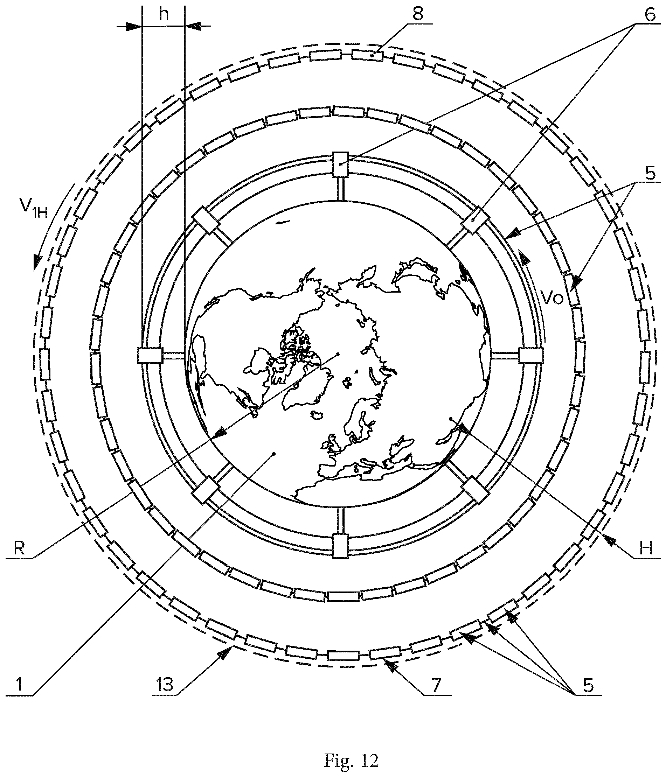

When general planetary vehicle 5 is lifted into space (see Fig. 12 to 14), it is necessary not just to raise it to altitude H, m, to planned circular orbit 13, but also to accelerate it around the planet to first cosmic velocity $V_{1H}$, m/sec. This is possible, according to law of conservation of angular momentum of closed system, only by pushing linear bearing structure 7 of general planetary vehicle 5, with transportation compartments 15 placed thereon for payload 14, away from linear flywheels 10.

Prior to launch of general planetary vehicle 5, linear flywheels 10.1 and/or 10.2 should have sufficient initial kinetic energy and launch amount (kinetic momentum) of motion to provide (see Fig. 16) a centrifugal force P, N, capable of lifting general planetary vehicle 5 of mass $m_0$, kg, to planned circular orbit 13, taking into account all energy losses occurring in this case:

- aerodynamic resistance at atmospheric area;
- losses in systems of magnetic and/or electromagnetic suspension 11 and linear electromagnetic drives 12;
- energy costs for elongation (increase) of length of circular structure of general planetary vehicle 5 as it climbs and its diameter increases;
- energy costs for overcoming gravity and lifting general planetary vehicle 5 from launch position to altitude H, m;
- energy costs for achieving annular (orbital) velocity of linear bearing structure 7 with payload 14 placed thereon (or therein);
- losses of energy as a result of its dissipation, including in case of reverse descent of general planetary vehicle 5 to planet 1.

Accordingly, the kinetic energy K, J, of at least one of linear flywheels 10 required to lift general planetary vehicle 5 to planned circular orbit 13 of altitude H, m is determined by the dependence:

$$K = 1/2 \ (m_M r_p^2 \ \varphi^2 + m_0 \dot{r}_p^2), \qquad (12)$$

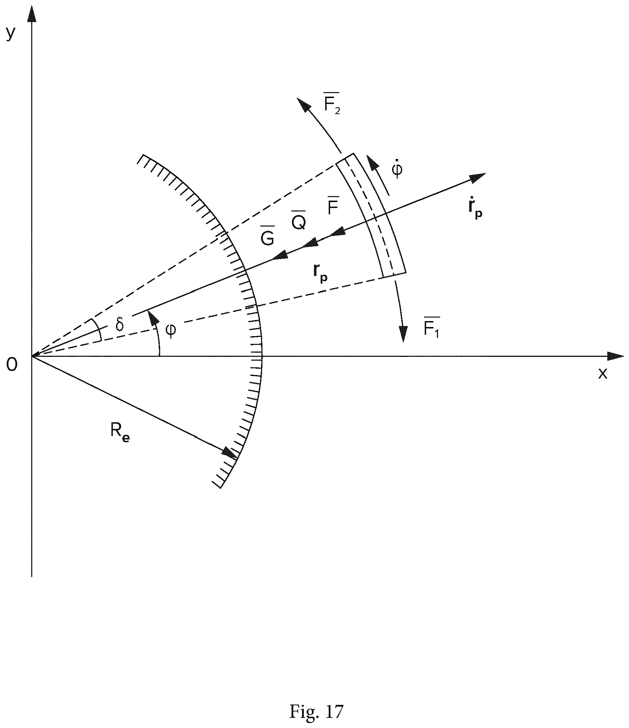

where $m_M$, kg, - weight of at least one of linear flywheels 10;
$r_p$, m, - current orbit radius of at least one of linear flywheels 10;
$\varphi$, rps, - angular velocity of at least one of linear flywheels 10;
$m_0$, kg, - mass of general planetary vehicle 5;
$\dot{r}_p$, m/sec, - radial velocity of general planetary vehicle 5;
and it must be greater than the attractive force to the center of planet 1, the elastic force acting on the members of linear bearing structure 7 during lifting of general planetary vehicle 5 and the resistance force of gaseous environment 23 of atmosphere of planet 1 (see Fig. 17), which are determined by the following dependencies:

$$G = m_0 g R_e^2 / r_p^2 \qquad (13)$$

$$F = 2 \ \pi c l \ (r_p / R_e - 1) \qquad (14)$$

$$Q = k_f \rho_0 \ \dot{r}_p^2 \ \exp \left(-\alpha_n (r_p / R_e - 1)\right) \qquad (15)$$

where, respectively, G, H, - attractive force of planet 1 (e.g., Earth);
g, m/sec$^2$, - gravitational acceleration at the equator;
$R_e$, m, - radius of the equator of the planet 1;
F, N, - elastic total force in a member of linear bearing structure 7 of general planetary vehicle 5;
c, N/m, - total rigidity of linear bearing structure 7 of general planetary vehicle 5;
l, m, - length of linear bearing structure 7 of general planetary vehicle 5 at the current orbit radius;
Q, N, - drag force of gaseous environment 23 of planetary 1 atmosphere;
$k_f$- factor depending on shape of shell of general planetary vehicle 5;
$\rho_0$, kg/m$^3$, - density of gaseous environment 23 of atmosphere of planet 1 on its surface;
$\alpha_n$ - exponent degree index, which determines decreasing density of atmosphere with height.

Second, general planetary vehicle 5 is held along its entire length $L_0$, m, on launch overpass 6 of altitude h, m, and/or in liquid 20 of ocean at launch depth $h_v$, m, and/or in gaseous environment 23 of planetary 1 atmosphere at launch altitude $h_l$, m, by means of fixing locks 19 of linear bearing structure 7 in the corresponding initial launch position (see Fig.8, Fig. 10 and Fig.11);
At the same time, depending on the design solution, various design versions of both locks 19 themselves and combinations of their anchoring schemes on planet 1, known in modern art, are possible.

Third - payload 14 of total mass $m_3$, kg, including ballast 26, is placed uniformly along the entire length $L_0$, m, of linear bearing structure 7 in transportation compartments 15;
Ballast 26 performs several important functions for operation of general planetary vehicle 5.

It provides for:

- balancing of linear bearing structure 7 during launch and lifting of general planetary vehicle 5 from planet 1;
- reduction of power consumption due to reduction of total mass $m_3$, kg, of payload 14 inserted into space onto planned circular orbit 13 of altitude *H*, m;
- ozone recovery, weather improvement, and climate stabilization (e.g., on Earth) resulting from spraying of ballast 26, e.g., oxygen, in gaseous environment 23 of planetary atmosphere (e.g., stratosphere to ionosphere).

Fourth, at least one linear flywheel 10 is accelerated in the co-rotational direction regarding the planet 1 to velocity $V_0$, m/sec, exceeding first cosmic velocity $V_{eh}$, m/sec, at altitude *h*, m, of launch overpass 6, and/or $V_{vh}$, m/sec, - first cosmic velocity in liquid of ocean at launch depth $h_v$, m, and/or $V_{lh}$, m/sec, - first cosmic velocity in gaseous environment of planetary atmosphere at launch altitude $h_l$, m, by at least 10%.

At least one of linear flywheels 10 is accelerated along the corresponding vacuum channel 9, wherein that linear flywheel 10 does not experience motion resistance and is rotated around the planet 1 with an axis of rotation passing through the center of mass of planet 1. As velocity increases, at least one of linear flywheels 10 accumulates the required amount of kinetic energy K, J, the pulse (angular momentum) which is necessary for general planetary vehicle 5 to reach planned circular orbit 13 at a given orbital velocity $V_{1H}$, m/sec.

Hereby, since acceleration path of linear flywheels 10 is infinite, therefore, the charging time of general planetary vehicle 5 is not limited to the necessary energy even under the condition of low power of linear electromagnetic drive 12. Efficiency of linear electromagnetic drives 12 of general planetary vehicle 5 is not less than 95%, that is, it will be about one hundred times higher than that of rocket (missile) (taking into account pre-launch and launch costs and energy losses, including for obtaining rocket fuel), energy efficiency of modern rocket carriers is less than 1%. Therefore, with the same drive capacity as heavy launch vehicle (about 100 million kilowatts), it will be possible to take into space not just tens of tons, but millions of tons of payload 14 per flight.

Various structural and operational characteristics of general planetary vehicle 5 with different combinations of weights of linear flywheels 10 are possible (with equal masses, or when one linear flywheel 10 is heavier and the other is lighter), with different launch acceleration modes of linear flywheels 10 (both linear flywheels 10 are accelerated on planet 1 either in one direction, or one flywheel in one direction, the other flywheel in the other direction), etc.

Fifth, general planetary vehicle 5 is launched by detaching along its entire length $L_0$, m, of fixing locks 19 of linear bearing structure 7;
When at least one of linear flywheels 10, encircling the planet 1, reaches first cosmic velocity $V_{eh}$, m/sec, in vacuum channel 9, for example, when starting from launch overpass 6 of altitude h, m, it will become weightless. As velocity of this linear flywheel 10 increases, the centrifugal force acting vertically (that is, from the center of planet 1 along its radius) will exceed its weight, that is, it will try to break it off from planet 1. When centrifugal forces from the accelerated linear flywheel 10 exceed the specific gravity of general planetary vehicle 5 (for example, equal to 1000 kgf/m), the entire system will become conditionally weightless (the weight of general planetary vehicle 5 will become zero, that is, it will stop pressing on launch overpass 6. If such linear flywheel 10 is accelerated to even higher velocity, there will be excessive lifting force sufficient to lift entire general planetary vehicle 5 together with payload 14 to planned circular orbit 13.

By simultaneously solving the equations (12), (13), (14) and (15), an expression is obtained for determining the acceleration from the centrifugal force of inertia of at least one of linear flywheels 10 when the above-mentioned forces are applied to general planetary vehicle 5 (see Fig.17), counteracting its start:

$$\mathrm{a} = m_M/m_0 \ r\,\varphi^2 - gR_e^2/r_p^2 - 2\,\pi cl/m_0 \ (r_p/R_e - 1) - k_f \rho_0/m_0 \ \dot{r}_p^2 \ \exp\left(-\alpha_n \left(r/R_e - 1\right)\right)$$

$$(16)$$

Which suggests the condition for beginning of radial movement upwards general planetary vehicle 5, defined by the expression:

$$V_0 > V_{1h} \sqrt{(1 + m_0/m_M)}, \qquad (17)$$

where, depending on initial start (launch) position, $V_{1h}$, m/sec, respectively - $V_{eh}$, m/sec, or $V_{vh}$, m/sec, or $V_{lh}$, m/sec.

Thus, as can be seen from the expressions (16) and (17), the following data are necessary to calculate the implementation of the start (launch) process, for example from the Earth, of general planetary vehicle 5 and its insertion into planned circular orbit 13 of altitude H, m:

1) Initial constant parameters for launch of general planetary vehicle 5 from the surface of Earth in the equator region, are as follows:

- radius $R_e$, m, of Earth in plane of the equator;
- gravitational acceleration g, m/sec$^2$, at the equator;
- initial density $\rho_0$, kg/m$^3$, of gaseous environment 23 of the Earth's atmosphere at which piezometric height $H_a$, m, of the averaged atmosphere with constant temperature corresponds to the value 6665, and the exponent degree index $\alpha_n$ in Halley formula, which determines the decrease in the density of the atmosphere the higher it gets, corresponds to the value of 995,736.

2) Parameters determining the position of planned circular orbit; value of corresponding launch velocity of at least the first linear flywheel 10.1, its length, weight and mechanical properties; specific mass of linear meter of general planetary vehicle 5; aerodynamic characteristics of the outer shell наружной оболочки of general planetary vehicle 5.

3) Parameters determining the position of the elastic and friction expansion sections of at least the first linear flywheel 10.1; iteration step on each section; radial velocity reduction factors at the end of friction sections.

Sixth, payload 14 of total mass $m_3$, kg, is lifted by means of linear bearing structure 7 of general planetary vehicle 5 to planned circular orbit 13 of altitude H, m, under action of centrifugal forces of at least one of linear flywheels 10;

Seventh, linear bearing structure 7 of general planetary vehicle 5 is guaranteed to attain circumferential velocity around planet 1 in co-rotational direction re planet 1, equal to first cosmic velocity $V_{1H}$, m/sec, on planned circular orbit of altitude $H$, M, above planet surface, by decelerating the first linear flywheel 10.1 and transmitting, respectively, according to law of conservation of angular momentum in closed system, the motion pulse from linear flywheel 10 of linear bearing structure 7 of general planetary vehicle 5, whereas energy generated during deceleration of the first linear flywheel 10.1 - for acceleration in counter-direction of the second linear flywheel 10.2;

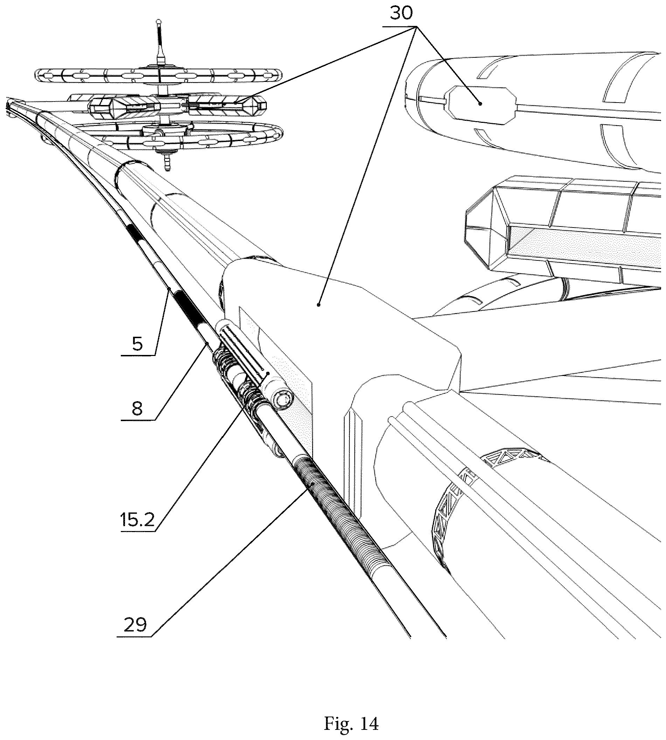

Eighth, linear electromagnetic drives 12 of both linear flywheels 10 are turned off in planned circular orbit 13 of altitude H, m, above surface of planet 1, and general planetary vehicle 5 is unloaded, for example, into orbital circular (seizing the planet) complex 30 (see Fig.14);

At this stage, alternatively, launch of classic interplanar rocket-type satellite (not shown in the figures), fixed on the outer part of pressure hull 8 of linear bearing structure 7 similar to transportation compartments 15.2, can be carried out from general planetary vehicle 5 inserted on planned circular orbit 13 of altitude H, m, above the surface of planet 1.

Ninth, general planetary vehicle 5 is returned to the initial launch position by lowering the altitude of linear bearing structure 7 of general planetary vehicle 5 from planned circular orbit 13 of altitude $H$, m, above the surface of planet 1 to $h$, m, or $h_v$, m, or $h_l$, m, respectively, on launch overpass 6, in liquid 20 of ocean or in gaseous environment 23 of planetary 1 atmosphere, by decelerating one of linear flywheels 10 and accelerating the other linear flywheel 10 in opposite direction until linear bearing structure 7 has a zero circumferential velocity relative to planet 1.

Tenth - upon return of general planetary vehicle 5 into initial launch position by means of fixing locks 19 (see Fig.8, 10 and 11) of linear bearing structure 7, it is fixed along the entire length $L_0$, M.

Modes of smooth acceleration and/or deceleration of linear flywheels 10 are secured thanks to action of adjustable linear force $N_0$, N/m, thereon, coming from all uniformly distributed over the entire length $L_0$, m, of linear bearing structure 7 of general planetary vehicle 5 of subsystems of the system of linear electromagnetic drives 12, as well as by maintaining the standard operation of subsystems of the system of magnetic and/or electromagnetic suspension 11, respectively, together with the system of linear electromagnetic drives 12. Operation of linear electromagnetic drives 12, in turn, is controlled and coordinated by control system 17 connected with them by means of communication system 18 equipped with feedback and technical parameters monitoring subsystems (see Fig. 15).

Control of motion of linear flywheels 10 and coordination of value of linear force $N_1$, N/m, acting on each individual section thereof, are performed so that all members of linear bearing structure 7 of general planetary vehicle 5 move uniformly, excluding occurrence of longitudinal vibrations and other possible disturbances in motion of members of its structure.

For this purpose, during operation of general planetary vehicle 5, throughout its linear flywheels 10, linear force $N_1$, N/m, their acceleration and/or deceleration are adjusted relative to the nominal value of that linear force $N_0$, N/m, within the boundaries, determined from the ratio:

$$0,9 \leq N_1/N_0 \leq 1,1 \qquad (12)$$

Range of ratio of linear force $N_1$, N/m, of acceleration and/or deceleration of linear flywheels 10 to nominal value of that linear force $N_0$, N/m, is selected on the basis of conditions of operation reliability of general planetary vehicle 5, stipulated by the design assignment, and possibility of achieving of the required velocity, including launch velocity, of linear flywheels 10 without possible disturbances in motion of members of general planetary vehicle 5.

In case the ratio (12) is equal to 1, the whole structure and all systems of general planetary vehicle 5 will have increased parameters for reliability and stability of their operation, however, at the same time, the cost of achieving this result will significantly increase.

In cases, when values of the ratio (12) are less than 0.9 or more than 1.1, the tasks of prevention of longitudinal vibrations and elimination of possibility of occurrence of other disturbances during free motion of extended linear members of general planetary vehicle 5 will become complicated to tackle, which is unacceptable, as it can lead to a penalized reliability and deteriorated stability of functioning thereof.

To carry out all transportation and insert into calculated orbit, for example, in the conditions of planet Earth, at altitude of 400 km, the payload 14 (passengers and cargoes), at least one of linear flywheels 10 of general planetary vehicle 5, - which has operational weight, e.g., 40 million tons (and, accordingly, specific weight - approximately 1000 kg/m), - should accumulate kinetic energy in the amount of $1,25 \times 10^{18}$ J (around $3,5 \times 10^{11}$ kW$\times$h). Taking into account energy losses and expenditures when entering circular orbit 13 (in particular, due to efficiency of linear electromagnetic drives 12 in order of 95%), the initial energy reserves should be at least by 10% more, that is, will be around $1,4 \times 10^{18}$ J ($3,9 \times 10^{11}$ kW$\times$h). Then, when connecting the power of general planetary vehicle 5, which is equal to less than 2% of the capacity of the world's power plants, to the external power system (Earth grid) of 100 million kW (or 2.5 kW per meter of length of linear bearing structure 7 of general planetary vehicle 5), initial charging time of the general planetary geospatial transportation complex - acceleration of at least one of linear flywheels 10 up to calculated velocity of $V_0$, m/sec - will take 420 hours (17.5 days).

After calculated velocity $V_0$, m/sec, is reached by at least one of linear flywheels 10, general planetary vehicle 5 of total mass of 40 million tons, of which 20 million tons are for linear flywheels 10, is ready for launch. But it is kept from lifting along its entire length $L_0$, m, by means of fixing locks 19 of linear bearing structure 7 of general planetary vehicle 5, for example, to launch overpass 6.

After payload 14 has been placed on general planetary vehicle 5, it is released by locks 19 along the entire length $L_0$, m, of linear bearing structure 7, and general planetary vehicle 5 is no longer kept by anything on planet 1.

Since flywheels are accelerated to velocities that allow the centrifugal forces to exceed the weight of each linear meter of general planetary vehicle 5, each of its linear meters begins to move from the center of rotation of linear flywheels 10, that is, to rise vertically upwards in plane of the equator passing through the center of mass of the Earth. At the same time, the ring (circle) of general planetary vehicle 5 will increase in diameter symmetrically in all directions relative to the center, and its body - elongate, stretch, without any displacement of the center of mass of this giant ring, which, according to law of conservation, will always coincide, in this case, with the center of mass of the planet Earth.

The acceleration of climbing into space depends on excessive centrifugal forces. For example, if lifting force acting on each linear meter of general planetary vehicle 5 is bigger than the weight of each linear meter thereof by 5%, general planetary vehicle 5 will start to climb up with a comfortable acceleration of 0.5 m/sec$^2$, or equal to 5% of gravitational acceleration. When moving with this acceleration, general planetary vehicle 5 will rise (expand in plane of the Earth's equator) to altitude of 100 km in 5 minutes 16 seconds and will have a vertical lift velocity at this altitude of 570 km/h.

During lifting for every 100 km above the Earth, the hull of general planetary vehicle 5 should extend by 1.57%. Accordingly, the diameter of pressure hull 8 of general planetary vehicle 5 will also increase by 1.57%, which is easily achievable by structural and technological solutions such as telescopic connections 28 along the length of the rigid units 27 of linear bearing structure 7 of general planetary vehicle 5, or by uniting them with each other by means of bellows 29 (spring tabs) and other proven techniques known from the art.

After leaving the dense atmosphere of the Earth (at altitudes of more than 10 km), the braking (generator) mode is activated on linear electromagnetic drive 12.1 of the first linear flywheel 10.1, accelerated at the surface of the Earth to cosmic velocity $V_0$, m/sec, in co-rotational direction of planet 1. The generated power is transmitted by means of control system 17 and communication system 18 to acceleration of the second linear flywheel 10.2 in the counter-direction in relation to the first linear flywheel 10.1. As a result, general planetary vehicle 5 receives a double pulse and begins to rotate towards the rotation of the Earth. If the acceleration of rotation is the same comfortable 0.5 m/sec$^2$, general planetary vehicle 5, and the entire payload 14 located therein (or thereon), will gain an estimated orbital, i.e. circular, velocity, for example, of 7671 m/sec (for an altitude of 400 km) after 4 hours.

The climbing and orbital velocity modes are selected so that general planetary vehicle 5 at a given altitude has an appropriate orbital velocity and is in equilibrium and its vertical (radial) velocity is zero. For this purpose, a special ballast system 25 is used in the process of entering space, if necessary. As part of payload 14, in amount of 0.1-10%, liquid and/or gaseous ballast 26 is used, uniformly arranged along the whole length $L_0$, m, of linear bearing structure 7.

In order to lift general planetary vehicle 5, it is necessary to have either initial excess of kinetic energy (linear flywheels 10 are accelerated on Earth, before launch, to a higher velocity) or, during lifting, it is required to reduce weight of general planetary vehicle 5 by dropping ballast 26. Most preferred is combination of these techniques.

With ballast 26 reserve of less than 0.1% of mass of payload 14, a significant increase in the velocity of rotation of linear flywheels 10 at launch is required in order to improve stabilization of general planetary vehicle 5 when it is lifted into space (to use the gyroscopic effect), resulting in unduly high energy costs and additional structural difficulties.

With ballast 26 reserve exceeding 10% of payload 14' mass, the share of payload 14 placed by linear bearing structure 7 of general planetary vehicle 5 into circular orbit 13 of altitude H, m, above the surface of planet 1, is significantly reduced, which leads to penalized efficiency of operation of the whole complex.

The total consumption of ballast 26 during lifting will be about 10-100 kilograms per linear meter of general planetary vehicle 5 (for the above cited input data).

Hereby, as ballast 26, ecologically friendly to Planet Earth substances and materials are used: water and/or compressed, and/or liquid air and/or oxygen, and/or nitrogen.

If such ballast 26 is sprayed in a predetermined amount in the ozone layer of planet 1 and above (altitudes from 10 to 60 km), it will be possible to regulate the oxygen and ozone content in the upper atmosphere and to "heal" the ozone holes, as well as ecologically safely manage the weather and climate on planet Earth.

In a non claimed example it is intended to use ballast 26 when lifting general planetary vehicle 5 into planned circular orbit 13 of altitude H, m to restore the ozone layer, improve weather and stabilize the climate on Earth by spraying the it in the atmosphere of planet 1, which is also a new essential feature corresponding to the inventive step.

Similar to the described example, launch of general planetary vehicle 5 placed in liquid 20 of the ocean of planet 1 at launch depth of $h_v$, m, and/or in gaseous environment 23 of planetary 1 atmosphere at launch altitude of $h_l$, m (see Fig. 10 and Fig.11). And all three variants of the proposed technical solution can be implemented on planet Earth.

After reaching planned circular orbit 13 and stabilizing general planetary vehicle 5 along the entire length $L_0$, m, of linear bearing structure 7 (no local vibrations) relative to the ideal orbit), the payload 14 is unloaded, for example, into the orbital circular (seizing the planet) complex 30 (see Fig.19).

The load-carrying capacity of the described variant of general planetary vehicle 5 is 250 kg/m under Earth conditions, or 10 million tons of payload 14.

The cost of geospatial transportation by general planetary vehicle 5 along the routes Earth-Orbit and Orbit-Earth consists of three main components:

    1) Energy costs of operation of all systems of general planetary vehicle 5, first of all - linear electromagnetic drives 12 and systems of magnetic and/or electromagnetic suspension 11 of linear flywheels 10, which consumes more than 95% of energy consumed by the whole general planetary geospatial transportation complex;
    2) Depreciation charges;
    3) Overhead costs for maintenance of the general planetary geospatial transportation complex.

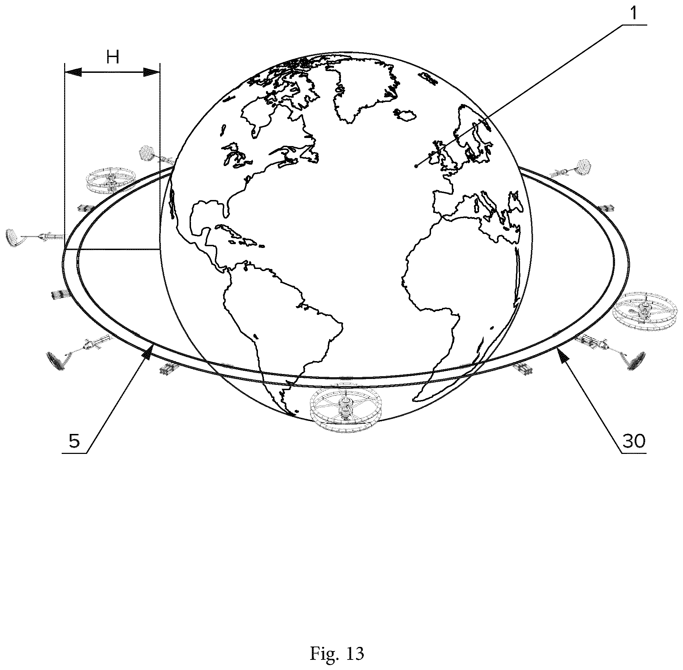

Initial energy supply required to lift general planetary vehicle 5 with total mass of $m_0$, kg, e.g. 40 million tons, into space, and return to Earth without payload 14, of total mass of $m_3$, kg, e.g. 10 million tons left in orbit (for example, in orbital circular complex 30 - see Fig.13), according to one of the variants of embodiment described above, - 4.2×1011 kW×hour. At the same time, the specific cost *of Ea* energy for the first launch of general planetary vehicle 5 will be as follows:

$$420\,000\,000\,000 \text{ kW×hour} \times 0,05 \text{ USD/kW×hour} = 21\,000\,000\,000 \text{ USD,}$$

or:

$$E_0 = 2\,100 \text{ USD/t.}$$

Therefore, on trips with the preferred one-way direction of the cargo traffic from planet 1 to planned circular orbit 13, it will be necessary to compensate in each trip only for the energy costs of the payload 14 delivered to space, the total mass $m_3$, kg, of which (loading factor) makes 25% of gross mass of general planetary vehicle 5. Thus, during this period of operation of general planetary vehicle 5 (in the first year), the delivery of one ton of cargo to planned circular orbit 13 of the Earth will require energy costs as follows: $E_1$ = 2 100 USD/t × 0,25 = 525 USD/t.

Hereby, once accelerated, linear flywheels 10 can rotate inside vacuum channels 9 for years, as the magnetic cushion of the magnetic and/or electromagnetic suspension system 11, like the vacuum of vacuum channels 9, will not create resistance when they travel at space velocities.

At equal Earth-Orbit and Orbit-Earth cargo traffic volumes, which will have been established approximately at the 10th year of operation of general planetary vehicle 5, additional energy will be necessary only for compensation of energy dissipation in linear electromagnetic drives 12 of linear flywheels 10. The total energy loss within general planetary vehicle 5 is less than 10%, so the cost of shipping a ton of cargo to orbit in this case (and, accordingly, to descend a ton of cargo to the surface of planet) will be: $E_2$ = 2 100 USD/T × 0,1 = 210 USD/t.

Once the orbital space industry is fully operational, and commercial exploitation of asteroids and the Moon as sources of raw materials has started, the need to deliver raw materials from Earth to planned circular orbit 13 will be significantly reduced. At the same time, the return cargo traffic from planned circular orbit 13 to the planet will significantly exceed the direct (one-way), as the main part of industrial production for earth-based citizens will be delivered from space. Even if in future the space-based industrial products of much higher quality (than that of the existing) will be produced by order less per capita than the current production on the planet, the annual volume of transportation on the route Orbit-Earth will reach 500 million tons after 10 years of operation of general planetary vehicle 5, which would require 50 launches into planned circular orbit 13 (approximately one launch per week). Hereby, general planetary vehicle 5 will insert less payload 14 into planned circular orbit 13 (it will make an outbound trip loaded of about 20% only), mainly because it will primarily shuttle into space to take the products manufactured there to deliver them to our planet to consumers - by then about 10 billion earthlings. This will make it possible to convert the potential and kinetic energy of space cargo delivered to Earth into electricity and annually provide the Earth's energy system with the equivalent of energy of 1 billion tons of oil. At that stage and the subsequent stages, energy costs will have negative value, and general planetary vehicle 5 will operate in the mode of a power plant making profit amounted to: 500,000,000 tons/year × 8000 kW×hour/t × 0.05 USD/kW×hour = 200 billion. USD/year, or, net, 400 USD for each excess ton of cargo delivered from planned circular orbit 13 to Earth.

At the same time, part of the energy will be spent on the own needs of general planetary vehicle 5 (around half), so each ton of excess cargo delivered to the planet from space will yield a net energy profit of: $E_3$ = 200 USD/t.

The capital costs for development (design and construction) of general planetary vehicle 5 can be estimated similarly to contemporary, high-potential electric vehicles, in which the majority of the cost comes from electrical equipment. In terms of complexity of equipment and composition of components, general planetary vehicle 5 is also approximately equivalent to electric vehicle (even less sophisticated) and will cost about the same amount, in terms of the cost of one ton of construction - not more than 25,000 USD/ton. Since mass of the loaded general planetary vehicle 5 (without payload 14) will be, in the described embodiment, 30 million tons, its estimated cost will be: 30 000 000 t × 25 000 USD/t = 750 billion USD.

A large hadron collider of 26.5 km, built on the border between Switzerland and France and located underground in a special tunnel of large diameter, is certainly a more technically complex product, in which the velocity of acceleration of elementary particles reaches light velocity (not 10 - 15 km/s, as for linear flywheels of general planetary vehicle), cost more than 6 billion USD - which also confirms justification of above stated estimated value of general planetary vehicle 5.

General planetary vehicle 5 is designed for 10,000 space launches and return landings. During that time, it will carry 100 billion tons of cargo. At the same time, depreciation charges per 1 ton of cargo from capital investments in general planetary vehicle 5 will be:

$$C_{\text{отс}} = 750\ 000\ 000\ 000\ \text{USD}/\ 100\ 000\ 000\ 000\ \text{t} = 7,5\ \text{USD/t.}$$

The length of the equatorial complex of launch overpass 6 of general planetary vehicle 5 will be 40,076 km, of which about 20% will be for land sections and 80% for sea sections.

Launch overpass 6 of general planetary vehicle 5, located along the equator 4.1, will represent transport and infrastructure communicator. Power transmission lines and communication lines will also be integrated into launch overpass 6 (not shown).

The cost of the support and communication part based on launch overpass 6 located along the equator 4.1 can be estimated at 1.320 billion USD, provided that, on average, it will cost 25 million USD/km on land sections and 35 million USD/km - on sea sections.

Accordingly, depreciation charges per 1 ton of cargo from capital investments in transport and communication part at the equatorial basing of launch overpass 6 will amount to:

$$C_{\text{ст}} = 1\ 320\ 000\ 000\ 000\ \text{USD}/\ 100\ 000\ 000\ 000\ \text{т} = 13,2\ \text{USD/t.}$$

Whereby total depreciation charges will be:

$$C_{\text{аморт.}} = C_{\text{отс}} + C_{\text{ст}} = 7,5\ \text{USD/t} + 13,2\ \text{USD/t} = 20,7\ \text{USD/t.}$$

Table 1

| Net cost of geospatial traffic per years of operation of general planetary vehicle (GPV) (for one of possible variants of embodiment) | | | | | | | |
|---|---|---|---|---|---|---|---|
| Year (starting from beginnin g of operation of GPV) | Annual traffic, million tons | | Cost components on geospatial transportation of ton of cargo, USD/t | | | | Net cost of traffic, USD/t |
| | To orbit | To planet Earth | Power | Payroll | Depreciation | Miscell aneous | |
| 1 | 100 | 10 | 525 | 90,9 | 20,7 | 63,4 | 700 |
| 2 | 200 | 50 | 450 | 40,0 | 20,7 | 39,3 | 550 |
| 3 | 300 | 100 | 300 | 25,0 | 20,7 | 24,3 | 370 |
| 4 | 400 | 150 | 200 | 18,2 | 20,7 | 21,1 | 260 |
| 5 | 500 | 200 | 150 | 14,3 | 20,7 | 15,0 | 200 |
| 6 | 500 | 250 | 100 | 13,3 | 20,7 | 11,0 | 145 |
| 7 | 400 | 300 | 50 | 14,3 | 20,7 | 10,0 | 95 |
| 8 | 300 | 350 | 0 | 15,4 | 20,7 | 8,9 | 45 |
| 9 | 200 | 400 | -100 | 16,7 | 20,7 | 7,6 | -55 |
| 10 | 100 | 500 | -200 | 16,7 | 20,7 | 7,6 | -155 |
| 11 | 100 | 500 | -200 | 16,7 | 20,7 | 7,6 | -155 |
| 12 | 100 | 500 | -200 | 16,7 | 20,7 | 7,6 | -155 |
| 13 | 100 | 500 | -200 | 16,7 | 20,7 | 7,6 | -155 |
| 14 | 100 | 500 | -200 | 16,7 | 20,7 | 7,6 | -155 |
| 15 | 100 | 500 | -200 | 16,7 | 20,7 | 7,6 | -155 |
| 16 | 100 | 500 | -200 | 16,7 | 20,7 | 7,6 | -155 |
| 17 | 100 | 500 | -200 | 16,7 | 20,7 | 7,6 | -155 |
| 18 | 100 | 500 | -200 | 16,7 | 20,7 | 7,6 | -155 |
| 19 | 100 | 500 | -200 | 16,7 | 20,7 | 7,6 | -155 |
| 20 | 100 | 500 | -200 | 16,7 | 20,7 | 7,6 | -155 |
| Total | 4 000 | 7 310 | | | | | |

Analysis of data presented in Table 1 allows to draw the following conclusions:

1) The highest net cost of geospatial cargo traffic - 700 USD/t - in the first year of operation, is driven by the need to initially accelerate linear flywheels 10 with substantial energy consumption required therefor, as well as - relatively low volume of annual traffic.
2) Over the years, as the volume of traffic increases, both direct and return, their cost decreases significantly.
3) On the 9th year of operation, when return cargo traffic (planned circular orbit 13 to planet 1) will substantially exceed direct cargo traffic (planet 1 to planned circular orbit 13), the net cost of traffic will become negative. This means that general planetary geospatial transportation complex will become profitable not only as a transport, but also as a giant power plant with a length of more than 40 thousand kilometers.

**Industrial applicability**

Development of general planetary geospatial transportation complex in conditions of planet Earth includes the following basic directions (stages):

1) Engineering research and design development of equatorial launch overpass 6 with transportation-communication part of general planetary geospatial transportation complex;

2) Preparation and realization (construction) of the equatorial launch overpass 6, with corresponding communication system (not shown on figs).

3) Manufacture and installation of general planetary vehicle 5 (length 40 076 km, total mass, without payload - 30 million tons), commissioning. The entire totality of works related to realization of general planetary geospatial transportation complex is planned to have been completed during 20 years - by 2038.

The cost of realization general planetary geospatial transportation complex and related works, till 2037 inclusive, is shown in Table 2. It should be noted that the maximum of future annual costs, i.e. 260 billion USD for the period 2032-2037, for example, is about 2 times less than the current US military budget. It also proves that the program of creating general planetary geospatial transportation complex can be implemented, based on their budgets for these years, by countries such as the USA, China, Russia, India and even Brazil, all on their own.

Table 2

| Cost of realization of general planetary geospatial transportation complex and related works (for one of possible variants of embodiment) | | | |
|---|---|---|---|
| | Annualized costs, billions USD | | |
| Year | R&D on the equatorial overpass and infrastructure of GPV, miscellaneous | Development of the equatorial launch overpass and land-based residential and industrial infrastructure (buildings, structures, power plants, ETL, communication lines, miscellaneous) | Realization (construction) of GPV | Total, billions USD |
| 2018 | 0,1 | - | - | 0,1 |
| 2019 | 0,2 | - | - | 0,2 |
| 2020 | 0,3 | - | - | 0,3 |
| 2021 | 0,4 | - | - | 0,4 |
| 2022 | 1 | - | - | 1 |
| 2023 | 2 | 1 | - | 3 |
| 2024 | 3 | 2 | - | 5 |
| 2025 | 4 | 3 | - | 7 |
| 2026 | 5 | 4 | 2 | 11 |
| 2027 | 6 | 10 | 3 | 19 |
| 2028 | 7 | 50 | 5 | 62 |
| 2029 | 8 | 80 | 15 | 103 |
| 2030 | 9 | 150 | 50 | 209 |
| 2031 | 10 | 150 | 75 | 235 |
| 2032 | 10 | 150 | 100 | 260 |
| 2033 | 10 | 150 | 100 | 260 |
| 2034 | 10 | 150 | 100 | 260 |
| 2035 | 10 | 150 | 100 | 260 |
| 2036 | 10 | 150 | 100 | 260 |
| 2037 | 10 | 150 | 100 | 260 |
| **Total** | **116** | **1 350** | **750** | **2 216** |

Total cost of realization of general planetary geospatial transportation complex during 20 years comparable to possible global spending in 2030 (i.e. in one year) on existing traditional space programs using rocket carriers (launch vehicles).

Currently, capacity of world market of space services amounts to, according to various estimates, 300-400 billion USD a year. The commercial component reaches 75%, and the state segment is about 25%. The volume of this market grows by 4-5% annually. Based on the level of development of existing space programs, experts predict acceleration of growth of market of space products and services.

By 2030, the market for space products and services could grow to about USD 1.5 trillion. There is a number of prerequisites for such significant growth.

Due to high cost of cargo shipments from Earth to space and back (about 10 million USD/t), at this stage of technology development, the industrial production in space is physically impossible and economically impractical. However, with a transportation system capable of providing cargo turnover between the Earth surface and the orbit in the amount of about 100 million tons per year and more at a low cost of delivery of 1 ton of cargo - about 1000 USD/ton or less - many Earth technologies will be able to reach a new level.

A variant of embodiment of the proposed solution on the planet Earth, according to one version of its design with load capacity of about 100 million tons, is as follows: general planetary vehicle 5 represents a closed "wheel" (see Fig.6, 7 and 12 to 14) with transverse diameter of about 6 meters, which rests, for example, on a special launch overpass 6, manufactured according to SkyWay technology, and installed along the equator 4.1. Altitude of launch overpass 6 depending on relief varies from several meters to several hundred meters and may include (see Fig.7) columns - supports 6.1, connected to each other by span structures 6.2 with network passages 6.3 located therein, made, for example, in the form of transport vacuum channels. On ocean spaces (see Fig.9), and they represent 76% of the length of the equatorial line, the launch overpass 6 may be an annular (circular) support bearing structure, also comprising columns - supports 6.1 with locks 19 fixed at a certain depth in liquid 20 of ocean with use of floating support 6.4, fastened by anchors 21.1 on ocean bed 21, connected to counterweights 6.5 of columns - supports 6.1, for example, by means of tension cables 6.6.

The launch process of general planetary vehicle 5 proceeds as follows. When electric power is supplied to the winding of linear electromagnetic drive 12 of at least one of linear flywheels 10, a traveling magnetic field is generated. In vacuum channel 9, located in pressure hull 8 of general planetary vehicle 5, there is a linear flywheel 10 having a magnetic and/or electromagnetic suspension 11 and being a kind of rotor of linear electromagnetic motor. Therein, a current is induced that will interact with the magnetic field which generated it, and linear flywheel 10, which does not experience any resistance (it is placed in vacuum), will come into motion (see Fig.8). More precisely, in rotation around the Earth. When the first cosmic velocity is reached, linear flywheel 10 will become weightless. At its further acceleration, centrifugal force, through magnetic and/or electromagnetic suspension 11, will exert ever-increasing effect on pressure hull 8 of general planetary vehicle 5, that is vertical lifting force, until each of its linear meters is counterweighted.

The payload 14 (loads and passengers) is placed into general planetary vehicle 5 being held on launch overpass 6, with the first linear flywheel 10.1 having specific weight of 2 tons per meter, pre-rotated to velocity of 16 km/s, and exactly the same, but quiescent, the second linear flywheel 10.2. The payload 14 is preferably placed on general planetary vehicle 5 prior to the start of linear flywheel 10. The payload 14 is placed both inside and outside pressure hull 8 of general planetary vehicle 5, but so that the load as a whole is evenly distributed along the length of the $L_0$, m, of linear bearing structure 7. After release of the locks 19 (see Figs.7, 8 and 9) holding general planetary vehicle 5 on the launch overpass 6, its diameter will start to grow slowly under the influence of the lifting force (centrifugal force generated by the rotating linear flywheel 10) and each of its linear meters will rise above Earth (see Fig. 12). Since the shape of the circle meets the minimum of energy, general planetary vehicle 5, which had previously largely copied the relief of Planet 1 according to the profile of launch overpass 6, will take the form of a "perfect ring" after lifting.

Also, upon lifting from launch overpass 6, general planetary vehicle 5 will be subjected to increased impact from the air flows, but they will not have a significant effect on its operation. Calculations show that the non-resting general planetary vehicle 5 has a unique flexural rigidity and stability which not available to static structures due to the rotational movement of linear flywheels 10. Thus, the additional load of 1,000 tons applied to the section of the general planetary vehicle 5 with a length of 1 kilometer, will bend it relative to the ideal circle by no more than 10 centimeters.

Mathematical analysis shows that the lifted general planetary vehicle 5 will be in equilibrium only if its total kinetic energy is equal to that of a body of the same mass moving at the first cosmic velocity. If the total energy is higher, the diameter of the "ring" of general planetary vehicle 5 will begin to increase, and if lower - to decrease. Then, in order to lift the general planetary vehicle 5, it is necessary to have either initial excess of kinetic energy (linear flywheels 10 are accelerated on Earth, before launch, to a higher velocity), or in the process of lifting, it is necessary to reduce the mass of the general planetary vehicle 5 by dropping ballast 26. The preferred is the combination of these techniques.

As ballast 26, ecologically friendly to Planet Earth substances and materials are used: water or pre-liquefied air, oxygen or nitrogen.

The tension of pressure hull 8 of general planetary vehicle 5, as its diameter increases, will be relatively small: its length under Earth conditions will increase by 1.57% per each 100 kilometers of lifting. Elongation of pressure hull 8 is compensated by moving its rigid units 27 relative to each other, the ends of which, for example, telescopically fit into each other and are interconnected, for example, by hydraulic cylinders (not shown on figures). Linear flywheel 10, for example, in the form of a closed multilayer endless belt, which represents a kind of rotor of linear electromagnetic motor, will be extended by elastic stretching or slight displacement of the layers of the forming belt with respect to each other (see Fig.18).

The lifting velocity of general planetary vehicle 5 at any section of the track can be set within wide limits, from pedestrian speed to aircraft velocity. General planetary vehicle 5 passes through atmospheric section at minimum possible radial velocities.

After leaving the dense atmosphere, the reversible mode of linear electromagnetic drive 12.1 of the first linear flywheel 10.1 is switched on to generator mode. Linear flywheel 10.1 will start to brake and linear electromagnetic drive 12.1 will generate electric current. This energy is transmitted through control system 17 and communication system 18 to linear electromagnetic drive 12.2 of the second linear flywheel 10.2, which is accelerated in counter direction to the movement of the first linear flywheel 10.1 (see Fig. 7 and 15).

As a result, the second linear flywheel 10.2, having, for example, same mass as the first linear flywheel 10.1, previously stationary with respect to pressure hull 8 of linear bearing structure 7 of general planetary vehicle 5, starts to rotate in reverse direction relative to the first linear flywheel 10.1. This ensures the law of energy conservation, in the process of insertion of payload 14 from surface of planet 1 into planned circular orbit 13 and stability of kinetic energy of members of general planetary vehicle 5 rotating around planet 1.

Pressure hull 8 of general planetary vehicle 5 and everything inside therein, and all that is attached to it from the outside - linear electromagnetic drives 12 with linear flywheels 10, as well as detachable transportation compartments 15.2 with payload 14 and the like - subject to law of conservation of angular momentum of the system, will come into rotation. It will start rotating in the same direction as the first linear flywheel 10. 1 until it reaches a circumferential velocity equal to the first cosmic velocity. Radial velocity of general planetary vehicle 5 will fall to zero. Thereafter, at altitude of, for example, 400 kilometers, the payload 14 (cargo and passengers), delivered to destination, is unloaded, for example, into orbital circular (seizing the planet) complex 30 located at altitude H, m, of planned circular orbit 13 of planet 1 (see Fig. 13 and 14).

Landing of general planetary vehicle 5 on Earth is performed in reverse order.

In this way, general planetary vehicle 5 will be put into near space in few hours if overloads therein are assumed at the level of the modem aerobus at the moment of its take-off (acceleration around 1-2 m/sec$^2$).

During transportation loop of general planetary vehicle 5, it will not require any outside power supply. General planetary vehicle 5 will consume the initial kinetic energy reserve, which from the first linear flywheel 10.1, during launch of general planetary vehicle 5, will be redistributed to its pressure hull 8, and upon return to the planet 1, will be redistributed again between linear flywheels 10.1 and 10.2, for example, partially transmitted to at least the second linear flywheel 10.2. To the internal energy of the system of general planetary vehicle 5, space cargo energy will be added, - payload 14, delivered from space to Earth. For example, delivering a ton of cargo from the Moon will produce the same amount of energy as a ton of oil (the lunar cargo with respect to Earth has kinetic and potential energy which are utilized by general planetary vehicle 5 and converted into electrical form).

On the way to space and back, general planetary vehicle 5 will receive such amount of cheap energy that will satisfy both its own needs and a large part of the energy needs of mankind as a whole. In addition to the described energy source - space cargo energy, there are at least three other energy sources suitable for use by the proposed general planetary geospatial transportation complex: solar energy obtained, for example, through solar panels, which can be fixed on the pressure hull 8; ionosphere currents and the Earth's rotational energy around its axis (not shown). The energy thus obtained by general planetary vehicle 5 will be either accumulated in its linear flywheels 10 or transferred to planet Earth.

It is estimated that the gross launch mass of general planetary vehicle 5 in the described example could be 400 million tons (10 tons per linear meter), payload 14 will be 100 million tons (2.5 tons per linear meter), passenger capacity - 100 million people.

As shown by the examples of calculation of process of payload 14 insertion from Earth's surface to planned circular orbit 13 of altitude H, m, the method and variants of embodiment of the invention, specified in the disclosed materials, the technical and economic parameters of the general planetary geospatial transportation complex by Yunitski, are optimized and ensure the industrialization of near space in the foreseeable future with the aim of taking the environmentally dirty earth-based manufacturing industry outside the biosphere.

Similar to the described embodiment of general planetary geospatial transportation complex by Yunitski on planet Earth, it is possible to implement it, for example, on the Moon, Mars, or on another planet, as well as on gaseous atmosphere giants such as Jupiter and Saturn, and on planets that have no land, but have an ocean.

Information sources

1. Циолковский К.Э. «Грёзы о Земле и небе и эффекты всемирного тяготения» 1895 г.

2. Арцутанов Ю.Н. «в космос - на электровозе» "Комсомольская правда" 31.07.1960 г.

3. Internet page: https://ru.wikipedia.org/wiki/Космический фонтан - as of 11.01.2018.

4. Internet page: https://surfingbird.com/surf/dDp51F571 - as of 11.01.2018. The Slingatron of Tidman.

5. Internet page: https://ru.wikipedia.org/wiki/Космическая пушка - as of 11.01.2018.

6. Форум читателей американского Общества астронавтики «Пусковая петля Кейта Лофстрона», ноябрь 1981г.

7. Journal: "Техника молодёжи", № 5, 1984 г., с. 30-35. «Космический мост».

8. Patent RU 2344973, IPC B64G 9/00, B64G 1/14, publ. 27.01.2009г.

9. Patent RU 2134650, IPC B64G 9/00, publ. 20.08.1999г.

10. Inventor's Certificate CCCP № 548182, IPC A63H 27/00, A63H 27/14, B64G 7/00, publ. 20.08.1999г.

11. Journal "Техника ", № 6, 1982 г., с. 34-36. «В космос... на колесе».

**Claims**

1. General planetary geospatial transportation complex, comprising a general planetary vehicle (5) encircling the planet (1) along the line of the planet surface cross-section by the plane (4) parallel to the plane of the equator, said complex fastened on launch overpass (6) of altitude h, m, defined by the ratio:

$$10^{-7} \leq h/R \leq 10^{-4}, \qquad (1)$$

where $R$, is the radius of the planet (1), said complex representing a linear bearing structure (7) encircling the planet (1) and having length $L_0$, said complex comprising a pressure hull (8) with at least two vacuum channels (9), forming rings around the planet (1), in the first one of which a first endless planet-encircling linear flywheel (10.1) is located, and in the second one a second endless planet-encircling linear flywheel (10.2) is located, wherein the first linear flywheel (10.1) and the second linear flywheel (10.2) are contactlessly positioned in relation to the walls of the corresponding vacuum channels (9) and equipped with systems (11, 12) of magnetic and/or electromagnetic suspension and linear electromagnetic drives respectively, configured to accelerate the linear flywheels (10.1, 10.2) to velocity $V_0$, m/s defined by the ratio:

$$1,1 \leq V_0/V_{eh} \leq 5, \qquad (2)$$

where $V_{eh}$, is the first cosmic velocity at altitude $h$, the linear bearing structure (7) is equipped with transportation compartments (15) and configured to be elongated without uniformity loss, defined by the ratio:

$$1,01 \leq L_H/L_0 \leq 1,25, \qquad (3)$$

where $L_H$, is the length of the linear bearing structure (7) at circular orbit of altitude $H$, and linear flywheels (10.1, 10.2) having masses $m_1$ and $m_2$, defined by the ratio:

$$0,1 \leq m_1/m_2 \leq 10, \qquad (4)$$

wherein the drives of linear flywheels (10.1, 10.2) are connected with power supply source (16) via control and communication systems (17, 18);
wherein the general planetary geospatial transportation complex is equipped with fixing locks (19) at launch altitude $h$, along the entire length $L_0$.

2. General planetary geospatial transportation complex, comprising a general planetary vehicle (5) encircling the planet (1) along the line of the planet surface cross-section by the plane (4) parallel to the plane of the equator, said complex fastened in liquid (20) of planetary ocean at launch depth $h_v$, m, defined by the ratio:

$$10^{-7} \leq h_v/R_v \leq 10^{-4}, \qquad (5)$$

where $R_v$ is the radius of the planet, said complex representing a linear bearing structure (7) encircling the planet (1) and having length $L_0$, said complex comprising a pressure hull (8) with at least two vacuum channels (9), forming rings around the planet (1), in the first one of which the first endless planet-encircling linear flywheel (10.1) is located, and in the second one the second endless planet-encircling linear flywheel (10.2) is located, wherein the first and the second linear flywheels (10.1, 10.2) are contactlessly positioned in relation to the walls of the corresponding vacuum channels (9) and equipped with systems (11, 12) of magnetic and/or electromagnetic suspension and linear electromagnetic drives respectively, configured to accelerate the linear flywheels (10.1, 10.2) to velocity of $V_0$, m/s, defined by the ratio:

$$1{,}1 \leq V_0/V_{vh} \leq 5, \qquad (6)$$

where $V_{vh}$ is the first cosmic velocity at launch depth $h_v$, the linear bearing structure (7) is equipped with transportation compartments (15) and configured to be elongated without uniformity loss, defined by the ratio (3):

$$1{,}01 \leq L_H/L_0 \leq 1{,}25,$$

and linear flywheels (10.1, 10.2) have masses $m_1$ and $m_2$, kg, defined by the ratio (4):

$$0{,}1 \leq m_1/m_2 \leq 10,$$

whereby the general planetary vehicle (5) is performed with launch density $\rho_{1v}$, kg/m$^3$, defined by the ratio:

$$0{,}5 \leq \rho_2/\rho_{1v} \leq 2, \qquad (7)$$

where $p_2$ is the density of liquid (20) of planetary ocean at launch depth $h_v$, wherein the drives of linear flywheels (10.1, 10.2) are connected with power supply source (16) via control and communication systems (17, 18); wherein the general planetary vehicle is secured by pontoon means (22), responsible for fastening linear bearing structure (7) in liquid (20) of ocean at depth $h_v$, wherein the general planetary geospatial transportation complex is equipped with fixing locks (19) at launch altitude $h_v$ along the entire length $L_0$.

3. General planetary geospatial transportation complex, comprising a general planetary vehicle (5) encircling the planet (1) along the line of the planet surface cross-section by the plane (4) parallel to the plane of the equator, fastened in gaseous environment (23) of planetary atmosphere at launch altitude $h_l$, defined by the ratio:

$$10^{-7} \leq h_l/R_l \leq 10^{-2}, \qquad (8)$$

where $R_l$ is the radius of the planet (1), said complex representing a linear bearing structure (7) encircling the planet (1) and having length $L_0$, comprising pressure hull (8) with at least two vacuum channels (9), forming rings around the planet (1), in the first one of which the first endless planet-encircling linear flywheel (10.1) is located, and in the second one the second endless planet-encircling linear flywheel (10.2) is located, wherein the first linear flywheel (10.1) and the second linear flywheel (10.2) are contactlessly positioned in relation to the walls of the corresponding vacuum channels (9) and equipped with systems (11, 12) of magnetic and/or electromagnetic suspension and linear electromagnetic drives respectively, configured to accelerate linear flywheels (10.1, 10.2) to velocity of $V_0$, m/s, defined by the ratio:

$$1,1 \le V_0/V_{lh} \le 5, \qquad (9)$$

where $V_{lh}$, is the first cosmic velocity at launch altitude $h_l$, the bearing structure (7) is equipped with transportation compartments (15) and configured to be elongated without uniformity loss, defined by the ratio (3):

$$1,01 \le L_H/L_0 \le 1,25,$$

and linear flywheels (10.1, 10.2) have masses $m_1$ and $m_2$, defined by the ratio (4):

$$0,1 \le m_1/m_2 \le 10,$$

wherein the general planetary vehicle (5) is performed with launch density $\rho_{1l}$, kg/m$^3$, defined by the ratio:

$$0,1 \le \rho_3/\rho_{II} \le 2, \qquad (10)$$

where $p_3$, is the density of gaseous environment (23) of planetary atmosphere at launch altitude $h_l$, wherein the drives of linear flywheels (10.1, 10.2) are connected with power supply source (16) via control and communication systems (17, 18);
wherein the general planetary vehicle is secured by balloons (24), responsible for fastening linear bearing structure (7) in gaseous environment (23) of atmosphere at altitude $h_l$,
wherein the general planetary geospatial transportation complex is equipped with fixing locks (19) at launch altitude $h_l$, along the entire length $L_0$.

4. General planetary geospatial transportation complex according to any of claims 1, 2 and 3, wherein the transportation compartments (15) are embodied inside the body of linear bearing structure (7), or fastened outside thereupon

5. General planetary geospatial transportation complex according to any of claims 1, 2 and 3, wherein the general planetary vehicle (5) is equipped by linear ballast system (25), covering the planet (1) and uniformly loaded along its entire length with liquid and/or gaseous ballast (26).

6. General planetary geospatial transportation complex according to any of claims 1, 2, 3 and 5, wherein the linear bearing structure (7) of general planetary vehicle (5) is made from elastically deformable material with modulus of elasticity E, Pa, within the following range:

$$10^8 \le E \le 5 \times 10^{11} \qquad (11)$$

7. General planetary geospatial transportation complex according to any of claims 1, 2, 3 and 5, wherein linear bearing structure (7) is embodied as telescopically interconnected units (28).

8. General planetary geospatial transportation complex according to any of claims 1, 2, 3 and 5, wherein linear bearing structure (7) is embodied as units interconnected by bellows (29).

9. Method for circular orbit payload insertion, according to which

- a general planetary geospatial transportation complex is made available, according to any of claims 1, 2 and 3;
- general planetary vehicle (5), along its entire length $L_0$, m, is held on launch overpass (6) of altitude h, m, or liquid (20) of ocean at launch depth $h_v$, m, or in gaseous environment (23) of planetary atmosphere at launch altitude $h_l$, m, by fixing locks (19) of linear bearing structure in initial launch position;
- payload (14) of total mass $m_3$, kg, is placed uniformly along the entire length $L_0$, m, of linear bearing structure (7) in transportation compartments (15);
- at least one linear flywheel (10) is subjected to acceleration at least by 10% in co-rotational direction to velocity of $V_0$, m/sec, exceeding first cosmic velocity $V_{eh}$, m/sec, at altitude h, m, of launch overpass (6), and/or $V_{vh}$, m/sec, - first cosmic velocity in liquid (20) of ocean at launch depth $h_v$, m, and/or $V_{lh}$, m/sec, - first cosmic velocity in gaseous environment (23) of planetary atmosphere at launch altitude $h_l$, m;

- launch of general planetary vehicle (5) is executed via detachment thereof along its entire length $L_0$, m, of fixing locks (19) of linear bearing structure;

- lifting of payload (14) of total mass $m_3$, kg, with use of linear bearing structure (7) of general planetary vehicle (5) on planned circular orbit of altitude H, m, centrifugally, due to action of at least one of linear flywheels (10);

- guaranteed achieving of circumferential velocity of linear bearing structure (7) of general planetary vehicle (5) around the planet (1) in co-rotational direction, equal to first cosmic velocity $V_{1H}$, m/sec, on planned circular orbit (13) of altitude $H$, m, above surface of planet (1), via deceleration of the first linear flywheel (10.1) and transmission of energy (produced due to deceleration thereof) to acceleration of the second linear flywheel (10.2) in counter direction;

- shutting down solenoid actions of both linear flywheels (10.1, 10.2) on planned circular orbit (13) of altitude H, m, above surface of planet and unloading of transportation compartments (15) of general planetary vehicle (5);

- returning of general planetary vehicle (5) into initial launch position by lowering altitude of deployment of linear bearing structure (7) of general planetary vehicle (5) from circular orbit of altitude $H$, m, over planet surface, to value $h$, m, or $h_v$, m, or $h_l$, m, respectively in overpass (6), in liquid (20) of ocean or in gaseous environment (23) of planetary atmosphere, via deceleration of one of linear flywheels (10.1, 10.2) and acceleration of another linear flywheel (10.1, 10.2) in counter direction to receive zero circumferential velocity by linear bearing structure (7) of general planetary vehicle (5) in relation to planet (1);

- upon return of general planetary vehicle (5) into initial launch position, clamping thereof with use of fixing locks (19) of linear bearing structure along its entire length $L_0$, m.

10. Method according to claim 9, wherein linear force $N_1$, N/m, of acceleration and/or deceleration of linear flywheels (10.1, 10.2) is applied uniformly along entire length thereof via linear electromagnetic drives (12).

11. Method according to claims 9 and 10, wherein during operation of general planetary vehicle (5), along the entire length of its linear flywheels (10.1, 10.2), linear force $N_1$, N/m, of their acceleration and/or deceleration, is regulated with regard to the rated value of that linear force $N_0$, N/m, within the range determined by the ratio:

$$0,9 \leq N_1/N_0 \leq 1,1 \qquad (12)$$

12. Method according to claim 9, wherein, as part of payload (14), in the amount of 0,1-10% of its mass $m_3$, kg, liquid and/or gaseous ballast (26) uniformly loaded along the entire length $L_0$, m, of linear bearing structure (7), is used.

**Patentansprüche**

1. Generell planetarer geospatialer Transportkomplex, der ein generell planetares Fahrzeug (5), das den Planeten (1) entlang der Linie des Planetenflächenquerschnitts durch die zur Äquatorebene parallele Ebene (4) umgibt, aufweist, wobei der Komplex auf einer Abschussüberführung (6) in einer Höhe h [m] befestigt ist, die durch das Verhältnis definiert ist:

$$10^{-7} \leq h/R \leq 10^{-4}, \qquad (1)$$

wobei R der Radius des Planeten (1) ist, wobei der Komplex eine lineare Lagerstruktur (7), die den Planeten (1) umgibt und eine Länge $L_0$ hat, darstellt, wobei der Komplex eine Druckhülle (8) mit mindestens zwei Vakuumkanälen (9), die Ringe um den Planeten (1) bilden, aufweist, wobei sich in dem ersten von diesen eine erste endlose, den Planeten umgebende lineare Schwungmasse (10.1) befindet und sich in dem zweiten eine zweite endlose, den Planeten umgebende lineare Schwungmasse (10.2) befindet, wobei die erste lineare Schwungmasse (10.1) und die zweite lineare Schwungmasse (10.2) in Bezug auf die Wände der entsprechenden Vakuumkanäle (9) berührungslos positioniert sind und jeweils mit Systemen (11, 12) zum magnetischen und/oder elektromagnetischen Schweben und linearen elektromagnetischen Antrieben ausgestattet sind, die konfiguriert sind, um die linearen Schwungmassen (10.1, 10.2) auf eine Geschwindigkeit $V_0$ [m/s] zu beschleunigen, die durch das Verhältnis definiert ist:

$$1,1 \leq V_0/V_{eh} \leq 5, \qquad (2)$$

wobei $V_{eh}$ die erste kosmische Geschwindigkeit in der Höhe h ist, wobei die lineare Lagerstruktur (7) mit Transporträumen (15) ausgestattet und konfiguriert ist, um ohne Gleichförmigkeitsverlust verlängert zu werden, und zwar definiert durch das Verhältnis:

$$1,01 \leq L_H/L_0 \leq 1,25, \quad (3)$$

wobei $L_H$ die Länge der linearen Lagerstruktur (7) auf einer kreisförmigen Umlaufbahn in der Höhe H ist, und die linearen Schwungmassen (10.1, 10.2) Massen $m_1$ und $m_2$ haben, die durch das Verhältnis definiert sind:

$$0,1 \leq m_1/m_2 \leq 10, \quad (4)$$

wobei die Antriebe der linearen Schwungmassen (10.1, 10.2) über Steuerungs- und Kommunikationssysteme (17, 18) mit einer Energieversorgungsquelle (16) verbunden sind;
wobei der generell planetare geospatiale Transportkomplex mit Befestigungsverriegelungen (19) entlang der gesamten Länge $L_0$ in der Abschusshöhe h ausgestattet ist.

2. Generell planetarer geospatialer Transportkomplex, der ein generell planetares Fahrzeug (5), das den Planeten (1) entlang der Linie des Planetenflächenquerschnitts durch die zur Äquatorebene parallele Ebene (4) umgibt, aufweist, wobei der Komplex in einer Flüssigkeit (20) eines planetaren Ozeans in einer Abschusstiefe $h_v$ [m] befestigt ist, die durch das Verhältnis definiert ist:

$$10^{-7} \leq h_v/R_v \leq 10^{-4}, \quad (5)$$

wobei $R_v$ der Radius des Planeten ist, wobei der Komplex eine lineare Lagerstruktur (7), die den Planeten (1) umgibt und eine Länge $L_0$ hat, darstellt, wobei der Komplex eine Druckhülle (8) mit mindestens zwei Vakuumkanälen (9), die Ringe um den Planeten (1) bilden, aufweist, wobei sich in dem ersten von diesen die erste endlose, den Planeten umgebende lineare Schwungmasse (10.1) befindet und sich in dem zweiten die zweite endlose, den Planeten umgebende lineare Schwungmasse (10.2) befindet, wobei die erste und zweite linearen Schwungmassen (10.1, 10.2) in Bezug auf die Wände der entsprechenden Vakuumkanäle (9) berührungslos positioniert sind und jeweils mit Systemen (11, 12) zum magnetischen und/oder elektromagnetischen Schweben und linearen elektromagnetischen Antrieben ausgestattet sind, die konfiguriert sind, um die linearen Schwungmassen (10.1, 10.2) auf eine Geschwindigkeit $V_0$ [m/s] zu beschleunigen, die durch das Verhältnis definiert ist:

$$1,1 \leq V_0/V_{vh} \leq 5, \quad (6)$$

wobei $V_{vh}$ die erste kosmische Geschwindigkeit in der Abschusstiefe $h_v$ ist, wobei die lineare Lagerstruktur (7) mit Transporträumen (15) ausgestattet und konfiguriert ist, um ohne Gleichförmigkeitsverlust verlängert zu werden, und zwar definiert durch das Verhältnis (3):

$$1,01 \leq L_H/L_0 \leq 1,25,$$

und die linearen Schwungmassen (10.1, 10.2) Massen $m_1$ und $m_2$ [kg] haben, die durch das Verhältnis (4) definiert sind:

$$0,1 \leq m_1/m_2 \leq 10,$$

wobei das generell planetare Fahrzeug (5) mit einer Abschussdichte $\rho_{1v}$ [kg/m$^3$] betrieben wird, die durch das Verhältnis definiert ist:

$$0,5 \leq \rho_2/\rho_{1v} \leq 2, \quad (7)$$

wobei $\rho_2$ die Dichte der Flüssigkeit (20) des planetaren Ozeans in der Abschusstiefe $h_v$ ist,
wobei die Antriebe der linearen Schwungmassen (10.1, 10.2) über Steuerungs- und Kommunikationssysteme (17, 18) mit einer Energieversorgungsquelle (16) verbunden sind;
wobei das generell planetare Fahrzeug durch Pontonmittel (22), die für ein Befestigen der linearen Lagerstruktur (7) in der Flüssigkeit (20) des Ozeans in der Tiefe $h_v$ verantwortlich sind, gesichert ist,
wobei der generell planetare geospatiale Transportkomplex mit Befestigungsverriegelungen (19) entlang der gesamten Länge $L_0$ in der Abschusshöhe $h_v$ ausgestattet ist.

3. Generell planetarer geospatialer Transportkomplex, der ein generell planetares Fahrzeug (5), das den Planeten (1) entlang der Linie des Planetenflächenquerschnitts durch die zur Äquatorebene parallele Ebene (4) umgibt, aufweist und in einer gasförmigen Umgebung (23) einer planetaren Atmosphäre in einer Abschusshöhe $h_l$ befestigt ist, die durch das Verhältnis definiert ist:

$$10^{-7} \leq h_l/R_l \leq 10^{-2}, \qquad (8)$$

wobei $R_l$ der Radius des Planeten (1) ist, wobei der Komplex eine lineare Lagerstruktur (7), die den Planeten (1) umgibt und eine Länge $L_0$ hat, darstellt und eine Druckhülle (8) mit mindestens zwei Vakuumkanälen (9), die Ringe um den Planeten (1) bilden, aufweist, wobei sich in dem ersten von diesen eine erste endlose, den Planeten umgebende lineare Schwungmasse (10.1) befindet und sich in dem zweiten eine zweite endlose, den Planeten umgebende lineare Schwungmasse (10.2) befindet, wobei die erste lineare Schwungmasse (10.1) und die zweite lineare Schwungmasse (10.2) in Bezug auf die Wände der entsprechenden Vakuumkanäle (9) berührungslos positioniert sind und jeweils mit Systemen (11, 12) zum magnetischen und/oder elektromagnetischen Schweben und linearen elektromagnetischen Antrieben ausgestattet sind, die konfiguriert sind, um die linearen Schwungmassen (10.1, 10.2) auf eine Geschwindigkeit $V_0$ [m/s] zu beschleunigen, die durch das Verhältnis definiert ist:

$$1,1 \leq V_0/V_{lh} \leq 5, \qquad (9)$$

wobei $V_{lh}$ die erste kosmische Geschwindigkeit in der Abschusshöhe h, ist, wobei die lineare Lagerstruktur (7) mit Transporträumen (15) ausgestattet und konfiguriert ist, um ohne Gleichförmigkeitsverlust verlängert zu werden, und zwar definiert durch das Verhältnis (3):

$$1,01 \leq L_H/L_0 \leq 1,25,$$

und die linearen Schwungmassen (10.1, 10.2) Massen $m_1$ und $m_2$ haben, die durch das Verhältnis (4) definiert sind:

$$0,1 \leq m_1/m_2 \leq 10,$$

wobei das generell planetare Fahrzeug (5) mit einer Abschussdichte $\rho_{1l}$ [kg/m$^3$] betrieben wird, die durch das Verhältnis definiert ist:

$$0,1 \leq \rho_3/\rho_{1l} \leq 2, \qquad (10)$$

wobei $\rho_3$ die Dichte der gasförmigen Umgebung (23) der planetaren Atmosphäre in der Abschusshöhe $h_l$ ist,
wobei die Antriebe der linearen Schwungmassen (10.1, 10.2) über Steuerungs- und Kommunikationssysteme (17, 18) mit einer Energieversorgungsquelle (16) verbunden sind;
wobei das generell planetare Fahrzeug durch Ballons (24), die für ein Befestigen der linearen Lagerstruktur (7) in der gasförmigen Umgebung (23) der Atmosphäre in der Höhe $h_l$ verantwortlich sind, gesichert ist,
wobei der generell planetare geospatiale Transportkomplex mit Befestigungsverriegelungen (19) entlang der gesamten Länge $L_0$ in der Abschusshöhe $h_l$ ausgestattet ist.

4. Generell planetarer geospatialer Transportkomplex gemäß einem der Ansprüche 1, 2 und 3, wobei die Transporträume (15) im Inneren des Körpers der linearen Lagerstruktur (7) ausgebildet oder von außen an diesem befestigt sind.

5. Generell planetarer geospatialer Transportkomplex gemäß einem der Ansprüche 1, 2 und 3, wobei das generell planetare Fahrzeug (5) mit einem linearen Ballastsystem (25), das den Planeten (1) bedeckt und entlang seiner gesamten Länge mit flüssigem und/oder gasförmigem Ballast (26) gleichmäßig beladen ist, ausgestattet ist.

6. Generell planetarer geospatialer Transportkomplex gemäß einem der Ansprüche 1, 2, 3 und 5, wobei die lineare Lagerstruktur (7) des generell planetaren Fahrzeugs (5) aus elastisch verformbarem Material mit einem Elastizitätsmodul E [Pa] innerhalb des folgenden Bereichs besteht:

$$10^8 \leq E \leq 5\times10^{11} \qquad (11)$$

7. Generell planetarer geospatialer Transportkomplex gemäß einem der Ansprüche 1, 2, 3 und 5, wobei die lineare Lagerstruktur (7) als teleskopisch miteinander verbundene Einheiten (28) ausgebildet ist.

8. Generell planetarer geospatialer Transportkomplex gemäß einem der Ansprüche 1, 2, 3 und 5, wobei die lineare Lagerstruktur (7) als durch Bälge (29) miteinander verbundene Einheiten ausgebildet ist.

9. Verfahren zum Einbringen von Nutzlasten in eine kreisförmige Umlaufbahn, wobei gemäß dem Verfahren:

   - ein generell planetarer geospatialer Transportkomplex gemäß einem der Ansprüche 1, 2 und 3 zur Verfügung gestellt wird;
   - ein generell planetares Fahrzeug (5) auf einer Abschussüberführung (6) in einer Höhe $h$ [m] oder in einer Flüssigkeit (20) eines Ozeans in einer Abschusstiefe $h_v$ [m] oder in einer gasförmigen Umgebung (23) einer planetaren Atmosphäre in einer Abschusshöhe $h$, [m] durch Befestigungsverriegelungen (19) einer linearen Lagerstruktur entlang deren gesamten Länge $L_0$ [m] in einer anfänglichen Abschussposition gehalten wird;
   - eine Nutzlast (14) mit einer Gesamtmasse $m_3$ [kg] entlang der gesamten Länge $L_0$ [m] einer linearen Lagerstruktur (7) in Transporträumen (15) gleichmäßig platziert wird;
   - mindestens eine lineare Schwungmasse (10) einer Beschleunigung von mindestens 10 % in gleichlaufender Rotationsrichtung zu einer Geschwindigkeit von $V_0$ [m/sec], die eine erste kosmische Geschwindigkeit $V_{eh}$ [m/sec] in der Höhe $h$ [m] der Abschussüberführung (6) und/oder $V_{vh}$ [m/sec] - eine erste kosmische Geschwindigkeit in der Flüssigkeit (20) des Ozeans in der Abschusstiefe $h_v$ [m] und/oder $V_{lh}$ [m/sec] - eine erste kosmische Geschwindigkeit in der gasförmigen Umgebung (23) der planetaren Atmosphäre in der Abschusshöhe $h_l$ [m] übersteigt, unterworfen wird;
   - ein Abschuss des generell planetaren Fahrzeugs (5) durch Lösen von diesem von den Befestigungsverriegelungen (19) der linearen Lagerstruktur entlang deren gesamten Länge $L_0$ [m] ausgeführt wird;
   - die Nutzlast (14) mit der Gesamtmasse $m_3$ [kg] unter Verwendung der linearen Lagerstruktur (7) des generell planetaren Fahrzeugs (5) auf die geplante kreisförmige Umlaufbahn in der Höhe $H$ [m] durch die Zentrifugalkraft aufgrund der Tätigkeit von mindestens einem der linearen Schwungmassen (10) gehoben wird;
   - eine Umfangsgeschwindigkeit der linearen Lagerstruktur (7) des generell planetaren Fahrzeugs (5) um den Planeten (1) in gleichlaufender Rotationsrichtung, die gleich der ersten kosmischen Geschwindigkeit $V_{1H}$ [m/sec] auf der geplanten kreisförmigen Umlaufbahn (13) in der Höhe $H$ [m] über der Oberfläche des Planeten (1) ist, durch Abbremsung der ersten linearen Schwungmasse (10.1) und Übertragung der (aufgrund deren Abbremsung erzeugten) Energie an eine Beschleunigung der zweiten linearen Schwungmasse (10.2) in entgegengesetzter Richtung garantiert erreicht wird;
   - Tätigkeiten von Magnetspulen von beiden linearen Schwungmassen (10.1, 10.2) auf der geplanten kreisförmigen Umlaufbahn (13) in der Höhe $H$ [m] über der Oberfläche des Planeten abgeschalten werden und die Transporträume (15) des generell planetaren Fahrzeugs (5) entladen werden;
   - das generell planetare Fahrzeug (5) in die anfängliche Abschussposition durch Verringerung der Einsatzhöhe der linearen Lagerstruktur (7) des generell planetaren Fahrzeugs (5) von einer kreisförmigen Umlaufbahn in der Höhe $H$ [m] über der Oberfläche des Planeten auf den Wert $h$ [m] oder $h_v$ [m] oder $h_l$ [m] auf der Überführung (6), in der Flüssigkeit (20) des Ozeans bzw. in der gasförmigen Umgebung (23) der planetaren Atmosphäre durch Abbremsung einer der linearen Schwungmassen (10.1, 10.2) und Beschleunigung einer anderen linearen Schwungmasse (10.1, 10.2) in entgegengesetzter Richtung, um durch die lineare Lagerstruktur (7) des generell planetaren Fahrzeugs (5) in Bezug auf den Planeten (1) die Umfangsgeschwindigkeit Null zu empfangen, rückgeführt wird;

- bei einer Rückkehr des generell planetaren Fahrzeugs (5) in die anfängliche Abschussposition, dieses unter Verwendung von Befestigungsverriegelungen (19) der linearen Lagerstruktur entlang deren gesamten Länge $L_0$ [m] festgeklemmt wird.

10. Verfahren gemäß Anspruch 9, wobei eine lineare Kraft $N_1$ [N/m] von einer Beschleunigung und/oder Abbremsung der linearen Schwungmassen (10.1, 10.2) entlang der gesamten Länge von diesen über lineare elektromagnetische Antriebe (12) gleichmäßig aufgebracht wird.

11. Verfahren gemäß den Ansprüchen 9 und 10, wobei während eines Betriebs des generell planetaren Fahrzeugs (5) entlang der gesamten Länge von dessen linearen Schwungmassen (10.1, 10.2) die lineare Kraft $N_1$ [N/m] von deren Beschleunigung und/oder Abbremsung in Bezug auf den Nennwert dieser linearen Kraft $N_0$ [N/m] reguliert wird, und zwar innerhalb des Bereichs, der durch das Verhältnis definiert wird:

$$0{,}9 \leq N_1/N_0 \leq 1{,}1 \qquad (12)$$

12. Verfahren gemäß Anspruch 9, wobei als Teil der Nutzlast (14) in der Größe von 0,1-10 % deren Masse $m_3$ [kg] flüssiger und/oder gasförmiger Ballast (26), der entlang der gesamten Länge $L_0$ [m] der linearen Lagerstruktur (7) gleichmäßig beladen ist, verwendet wird.

## Revendications

1. Complexe de transport géospatial panplanétaire, comprenant un véhicule panplanétaire (5) encerclant la planète (1) le long de la ligne d'intersection avec la surface de la planète par le plan (4) parallèle au plan de l'équateur, ledit complexe étant maintenu sur une passerelle de lancement (6) d'altitude h, m, définie par le rapport :

$$10^{-7} \leq h/R \leq 10^{-4}, \qquad (1)$$

où R est le rayon de la planète (1), ledit complexe représentant une structure porteuse linéaire (7) encerclant la planète (1) et présentant une longueur $L_0$, ledit complexe comprenant une coque pressurisée (8) avec au moins deux canaux sous vide (9), formant des anneaux autour de la planète (1), dans le premier desquels un premier volant d'inertie linéaire sans fin encerclant la planète (10.1) est positionné, et dans le second desquels un second volant d'inertie linéaire sans fin encerclant la planète (10.2) est positionné, dans lequel le premier volant d'inertie linéaire (10.1) et le second volant d'inertie linéaire (10.2) sont positionnés sans contact par rapport aux parois des canaux sous vide correspondants (9) et équipés de systèmes (11, 12) de suspension magnétique et/ou électromagnétique et d'entraînements électromagnétiques linéaires respectivement, configurés pour accélérer les volants d'inertie linéaires (10.1, 10.2) à la vitesse $V_0$, m/s, définie par le rapport :

$$1{,}1 \leq V_0/V_{eh} \leq 5, \qquad (2)$$

où $V_{eh}$ est la première vitesse cosmique à l'altitude h, la structure porteuse linéaire (7) est équipée de compartiments de transport (15) et configurée pour être allongée sans perte d'uniformité, définie par le rapport :

$$1{,}01 \leq L_H/L_0 \leq 1{,}25, \quad (3)$$

où $L_H$ est la longueur de la structure porteuse linéaire (7) à une orbite circulaire d'altitude H, et les volants linéaires (10.1, 10.2) présentant des masses $m_1$ et $m_2$, définies par le rapport :

$$0{,}1 \leq m_1/m_2 \leq 10, \quad (4)$$

dans lequel les entraînements des volants linéaires (10.1, 10.2) sont raccordés à une source d'alimentation en énergie (16) via des systèmes de commande et de communication (17, 18) ;
dans lequel le complexe de transport géospatial panplanétaire est équipé de verrous d'arrimage (19) à l'altitude de lancement h, sur toute la longueur $L_0$.

2.  Complexe de transport géospatial panplanétaire, comprenant un véhicule panplanétaire (5) encerclant la planète (1) le long de la ligne d'intersection avec la surface de la planète par le plan (4) parallèle au plan de l'équateur, ledit complexe étant maintenu dans un environnement liquide (20) d'un océan planétaire à une profondeur de lancement $h_v$, m, définie par le rapport :

$$10^{-7}\le h_v/R_v \le 10^{-4}, \quad (5)$$

où $R_v$ est le rayon de la planète, ledit complexe représentant une structure porteuse linéaire (7) encerclant la planète (1) et présentant une longueur $L_0$, ledit complexe comprenant une coque pressurisée (8) avec au moins deux canaux sous vide (9), formant des anneaux autour de la planète (1), dans le premier desquels le premier volant d'inertie linéaire sans fin encerclant la planète (10.1) est positionné, et dans le second desquels le second volant d'inertie linéaire sans fin encerclant la planète (10.2) est positionné, dans lequel le premier et le second volant d'inertie linéaire (10.1, 10.2) sont positionnés sans contact par rapport aux parois des canaux sous vide correspondants (9) et équipés de systèmes (11, 12) de suspension magnétique et/ou électromagnétique et d'entraînements électromagnétiques linéaires respectivement, configurés pour accélérer les volants d'inertie linéaires (10.1, 10.2) à la vitesse $V_0$, m/s, définie par le rapport :

$$1,1\le V_0/ V_{vh}\le 5, \quad (6)$$

où $V_{vh}$ est la première vitesse cosmique à la profondeur de lancement $h_v$, la structure porteuse linéaire (7) est équipée de compartiments de transport (15) et configurée pour être allongée sans perte d'uniformité, définie par le rapport (3) :

$$1,01 \le L_H/L_0 \le 1,25,$$

et les volants linéaires (10.1, 10.2) présentent des masses $m_1$ et $m_2$, kg, définies par le rapport (4) :

$$0,1 \le m_1/m_2 \le 10,$$

de telle sorte que le véhicule panplanétaire (5) est réalisé avec une densité au lancement $\rho_{1v}$, kg/m$^3$, définie par le rapport :

$$0,5 \le \rho_2/\rho_{1v} \le 2, \quad (7)$$

où $\rho_2$ est la densité de l'environnement liquide (20) de l'océan planétaire à la profondeur de lancement $h_v$, dans lequel les entraînements des volants linéaires (10.1, 10.2) sont raccordés à une source d'alimentation en énergie (16) via des systèmes de commande et de communication (17, 18) ;
dans lequel le véhicule panplanétaire est attaché par des moyens formant pontons (22), chargés de maintenir la structure porteuse linéaire (7) dans l'environnement liquide (20) de l'océan à une profondeur hv,
dans lequel le complexe de transport géospatial panplanétaire est équipé de verrous d'arrimage (19) à l'altitude de lancement hv, sur toute la longueur $L_0$.

3.  Complexe de transport géospatial panplanétaire, comprenant un véhicule panplanétaire (5) encerclant la planète (1) le long de la ligne d'intersection avec la surface de la planète par le plan (4) parallèle au plan de l'équateur, maintenu dans un environnement gazeux (23) d'une atmosphère planétaire à une altitude de lancement $h_l$, m, définie par le rapport :

$$10^{-7}\le h_l/R_l \le 10\text{-}2, \quad (8)$$

où $R_l$ est le rayon de la planète (1), ledit complexe représentant une structure porteuse linéaire (7) encerclant la planète (1) et présentant une longueur $L_0$, comprenant une coque pressurisée (8) avec au moins deux canaux sous vide (9), formant des anneaux autour de la planète (1), dans le premier desquels le premier volant d'inertie linéaire sans fin encerclant la planète (10.1) est positionné, et dans le second desquels le second volant d'inertie linéaire sans fin encerclant la planète (10.2) est positionné, dans lequel le premier volant d'inertie linéaire (10.1) et le second volant d'inertie linéaire (10.2) sont positionnés sans contact par rapport aux parois des canaux sous vide correspondants (9) et équipés de systèmes (11, 12) de suspension magnétique et/ou électromagnétique et d'entraînements électromagnétiques linéaires respectivement, configurés pour accélérer les volants d'inertie linéaires (10.1, 10.2) à la vitesse V0, m/s, définie par le rapport :

$$1,1 \leq V0/V_{lh} \leq 5, \qquad (9)$$

où $V_{lh}$ est la première vitesse cosmique à l'altitude de lancement $h_l$, la structure porteuse (7) est équipée de compartiments de transport (15) et configurée pour être allongée sans perte d'uniformité, définie par le rapport (3) :

$$1,01 \leq LH/L_0 \leq 1,25,$$

et les volants linéaires (10.1, 10.2) présentent des masses $m_1$ et $m_2$, définies par le rapport (4) :

$$0,1 \leq m_1/m_2 \leq 10,$$

dans lequel le véhicule panplanétaire (5) est réalisé avec une densité au lancement $\rho_{1l}$, kg/m$^3$, définie par le rapport :

$$0,1 \leq \rho_3 /\rho_{1l} \leq 2, \quad (10)$$

où $\rho_3$ est la densité de l'environnement gazeux (23) de l'atmosphère planétaire à l'altitude de lancement $h_l$, dans lequel les entraînements des volants linéaires (10.1, 10.2) sont raccordés à une source d'alimentation en énergie (16) via des systèmes de commande et de communication (17, 18) ;
dans lequel le véhicule panplanétaire est immobilisé par des ballons (24) chargés de maintenir la structure porteuse linéaire (7) dans l'environnement gazeux (23) de l'atmosphère à l'altitude $h_l$,
dans lequel le complexe de transport géospatial panplanétaire est équipé de verrous d'arrimage (19) à l'altitude de lancement, sur toute la longueur $L_0$.

4. Complexe de transport géospatial panplanétaire selon l'une quelconque des revendications 1, 2 et 3, dans lequel les compartiments de transport (15) sont incorporés à l'intérieur du corps de la structure porteuse linéaire (7), ou attachés sur celle-ci par l'extérieur.

5. Complexe de transport géospatial panplanétaire selon l'une quelconque des revendications 1, 2 et 3, dans lequel le véhicule panplanétaire (5) est équipé d'un système de ballast linéaire (25), couvrant la planète (1) et chargé uniformément sur toute sa longueur d'un ballast liquide et/ou gazeux (26).

6. Complexe de transport géospatial panplanétaire selon l'une quelconque des revendications 1, 2, 3 et 5, dans lequel la structure porteuse linéaire (7) du véhicule panplanétaire (5) est fabriquée
dans un matériau élastiquement déformable présentant un module d'élasticité E, Pa, dans les limites de la plage suivante :

$$10^8 \leq E \leq 5 \times 10^{11} \qquad (11)$$

7. Complexe de transport géospatial panplanétaire selon l'une quelconque des revendications 1, 2, 3 et 5, dans lequel la structure porteuse linéaire (7) est réalisée sous la forme d'unités interconnectées de façon télescopique (28).

8. Complexe de transport géospatial panplanétaire selon l'une quelconque des revendications 1, 2, 3 et 5, dans lequel la structure porteuse linéaire (7) est réalisée sous la forme d'unités interconnectées par des soufflets (29).

9. Procédé d'insertion de charges utiles en orbite circulaire, selon lequel :

- un complexe de transport géospatial panplanétaire est mis en oeuvre selon l'une quelconque des revendications 1, 2 et 3 ;
- un véhicule panplanétaire (5), sur toute sa longueur $L_0$, m, est maintenu sur une passerelle de lancement (6) d'altitude h, m, ou dans un environnement liquide (20) d'un océan à une profondeur de lancement $h_v$, m, ou dans un environnement gazeux (23) d'une atmosphère planétaire à une altitude de lancement $h_l$, m, par des verrous d'arrimage (19) de la structure porteuse linéaire dans une position de lancement initiale ;
- une charge utile (14) d'une masse totale $m_3$, kg, est placée uniformément sur toute la longueur $L_0$, m, de la structure porteuse linéaire (7) dans des compartiments de transport (15) ;
- au moins un volant d'inertie linéaire (10) est soumis à une accélération d'au moins 10 % dans une direction de corotation jusqu'à une vitesse de $V_0$, m/sec, supérieure à la première vitesse cosmique $V_{eh}$, m/sec, à une altitude h, m, de la passerelle de lancement (6), et/ou de $V_{vh}$, m/sec, - la première vitesse cosmique dans un environnement liquide (20) d'un océan à une profondeur de lancement hv, m, et/ou de $V_{lh}$, m/sec, - la première vitesse cosmique dans un environnement gazeux (23) d'une atmosphère planétaire à une altitude de lancement $h_l$, m ;
- le lancement du véhicule panplanétaire (5) est exécuté via le détachement de celui-ci sur toute sa longueur $L_0$, m, des verrous d'arrimage (19) de la structure porteuse linéaire ;
- ascension de la charge utile (14) d'une masse totale $m_3$, kg, à l'aide de la structure porteuse linéaire (7) du véhicule panplanétaire (5), jusqu'à l'orbite circulaire prévue d'altitude H, m, par une force centrifuge, due à l'action d'au moins un des volants linéaires (10) ;
- obtention garantie de la vitesse circonférentielle de la structure porteuse linéaire (7) du véhicule panplanétaire (5) autour de la planète (1) dans une direction de corotation, égale à la première vitesse cosmique $V_{1H}$, m/sec, sur l'orbite circulaire prévue (13) d'altitude H, m, au-dessus de la surface de la planète (1), via une décélération du premier volant linéaire (10.1) et transmission d'énergie (produite par la décélération de celui-ci) pour une accélération du second volant linéaire (10.2) dans la direction opposée ;
- coupure des actions électromagnétiques des deux volants d'inertie linéaires (10.1, 10.2) sur l'orbite circulaire prévue (13) d'altitude H, m, au-dessus de la surface de la planète et déchargement des compartiments de transport (15) du véhicule panplanétaire (5) ;
- retour du véhicule panplanétaire (5) vers la position de lancement initiale en réduisant l'altitude de déploiement de la structure porteuse linéaire (7) du véhicule panplanétaire (5) depuis l'orbite circulaire d'altitude H, m, au-dessus de la surface de la planète, jusqu'à la valeur h, m, ou $h_v$, m, ou $h_l$, m, respectivement sur la passerelle (6), dans l'environnement liquide (20) d'un océan ou dans l'environnement gazeux (23) d'une atmosphère planétaire, via une décélération de l'un des volants linéaires (10.1, 10.2) et une accélération de l'autre volant linéaire (10.1, 10.2) dans la direction opposée pour acquérir une vitesse circonférentielle nulle par la structure porteuse linéaire (7) du véhicule panplanétaire (5) par rapport à la planète (1) ;
- au retour du véhicule panplanétaire (5) dans la position de lancement initiale, accrochage de celui-ci à l'aide de verrous d'arrimage (19) de la structure porteuse linéaire sur toute sa longueur $L_0$, m.

10. Procédé selon la revendication 9, dans lequel la force linéaire $N_1$, N/m, d'accélération et/ou de décélération des volants linéaires (10.1, 10.2) est appliquée uniformément sur toute la longueur de ceux-ci via des entraînements électromagnétiques linéaires (12).

11. Procédé selon les revendications 9 et 10, dans lequel pendant le fonctionnement du véhicule panplanétaire (5), sur toute la longueur de ses volants linéaires (10.1, 10.2), la force linéaire $N_1$, N/m, de leur accélération et/ou décélération est régulée par rapport à la valeur nominale de cette force linéaire $N_0$, N/m, dans les limites de la plage déterminée par le rapport :

$$0,9 \leq N_1/N_0 \leq 1,1 \quad (12)$$

12. Procédé selon la revendication 9, dans lequel, dans le cadre de la charge utile (14), selon la quantité de 0,1-10 % de sa masse $m_3$, kg, on utilise un ballast liquide et/ou gazeux (26) uniformément chargé sur toute la longueur $L_0$, m, de la structure porteuse linéaire (7).

Fig. 1

Fig. 2

Fig. 3

Fig. 4

Fig. 5

Fig. 6

Fig. 7

Fig. 8

Fig. 9

Fig. 10

Fig. 11

Fig. 12

EP 3 831 723 B1

Fig. 13

Fig. 14

Fig. 15

Fig. 16

Fig. 17

10    10.3    9

Fig. 18

Fig. 19

Fig. 20

**EP 3 831 723 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2017050751 A1

- US 6311926 B1

**Non-patent literature cited in the description**

- Visualization of Yunitskiy's OTS. *Sky Way,* 10 October 2017, https://www.youtube.com/watch?v=9KZe6YfoJVc&ab_channel=SkyWay